# EUROPEAN PATENT APPLICATION

(11) **EP 4 557 048 A1**
(43) Date of publication of application: **21.05.2025**
(21) Application number: 24776477.2
(22) Date of filing: 26.09.2024
(51) Int. Cl.: G06F 1/16

(54) **HINGE STRUCTURE AND FOLDABLE ELECTRONIC DEVICE COMPRISING SAME**

(30) Priority: 04.10.2023 KR 20230132034; 29.11.2023 KR 20230169604
(71) Applicant: Samsung Electronics Co., Ltd, Suwon-si, Gyeonggi-do 16677 (KR)
(72) Inventor: The designation of the inventor has not yet been filed
(74) Representative: HGF
(86) International application number: PCT/KR2024/014646
(87) International publication number: WO 2025/075351

(57) **Abstract**

A foldable electronic device includes a foldable display 160, a first housing 110 and a second housing 120 in each of which at least a portion of the display is accommodated, a first wing plate 131 that is disposed in the first housing 110 and that supports a folding area of the foldable display, a second wing plate 132 that is disposed in the second housing 120 and that supports the folding area of the foldable display, a plurality of hinge structures 200a, 200b, and 200c that foldably connect the first housing 110 and the second housing 120, and a hinge housing 150 in which the plurality of hinge structures are at least partially disposed. The plurality of hinge structures include a first hinge structure 200a and a second hinge structure 200b spaced apart from each other and a third hinge structure 200c disposed between the first hinge structure 200a and the second hinge structure 200b and engaged with the first wing plate 131 and the second wing plate 132 to rotate in conjunction with the first wing plate 131 and the second wing plate 132.

## Description

### [TECHNICAL FIELD]

Various embodiments of the disclosure relate to a hinge structure and a foldable electronic device including the same.

### [BACKGROUND ART]

A portable electronic device, such as a smartphone, may provide various functions including a call function based on various types of applications. In the process of providing the various functions, the portable electronic device may output screens corresponding to the respective functions. A user may want to use a wider screen when using the various functions. However, when a display device is enlarged to display a screen, the overall size of the portable electronic device may be increased, and therefore portability may be deteriorated. Accordingly, a foldable portable electronic device is being developed so as to increase the size of a screen while maintaining portability.

### [DETAILED DESCRIPTION OF THE INVENTION]

### [TECHINICAL PROBLEM]

### [TECHNICAL SOLUTION]

A foldable electronic device (or, a portable electronic device, a portable communication device, or a foldable electronic device having a communication function) according to at least one embodiment of the disclosure includes a display 160, a first housing 110 and a second housing 120 in each of which at least a portion of the display is accommodated, a first wing plate 131 that is disposed in the first housing 110 and that supports a folding area of the display, a second wing plate 132 that is disposed in the second housing 120 and that supports the folding area of the display, a plurality of hinge structures 200a, 200b, and 200c that foldably connect the first housing 110 and the second housing 120, and a hinge housing 150 on which the plurality of hinge structures are seated. The plurality of hinge structures include a first hinge structure 200a and a second hinge structure 200b spaced apart from each other and a third hinge structure 200c disposed between the first hinge structure 200a and the second hinge structure 200b and engaged with the first wing plate 131 and the second wing plate 132 to rotate in conjunction with the first wing plate 131 and the second wing plate 132.

A foldable electronic device (or, a portable electronic device, a portable communication device, or a foldable electronic device having a communication function) according to at least one embodiment of the disclosure includes a display 160, a first housing 110 and a second housing 120 in each of which at least a portion of the display is accommodated, a first wing plate 131 that is disposed in the first housing 110 and that supports a folding area of the display, a second wing plate 132 that is disposed in the second housing 120 and that supports the folding area of the display, a plurality of hinge structures 200a, 200b, and 200c that foldably connect the first housing 110 and the second housing 120, and a hinge housing 150 on which the plurality of hinge structures are seated. The plurality of hinge structures include a first hinge structure 200a including a first center bar 171, a second hinge structure 200b including a second center bar 172 disposed side by side with the first center bar, and a third hinge structure 200c that is disposed between the first hinge structure 200a and the second hinge structure 200b and that includes a third center bar 173 disposed between the first center bar and the second center bar. The third center bar 173 is formed to continuously cross the third hinge structure without a non-continuous section.

### [ DESCRIPTION OF THE DRAWINGS]

FIG. 1 is an exploded perspective view of an electronic device according to an embodiment.
FIG. 2 is a plan view in which a display of the electronic device is omitted according to an embodiment.
FIGS. 3A and 3B are views illustrating an example of the structure of the display of the electronic device according to an embodiment.
FIG. 4 is a view illustrating an example of a hinge structure according to an embodiment.
FIG. 5 is a front exploded perspective view of the hinge structure according to an embodiment.
FIG. 6 is a rear exploded perspective view of the hinge structure according to an embodiment.
FIG. 7 is a view illustrating an unfolded state and a folded state of the hinge structure included in the electronic device according to an embodiment.
FIG. 8 is a view illustrating an example of the formation of axes of a first hinge structure in an unfolded state of the first hinge structure included in the electronic device according to an embodiment.
FIG. 9 is a view illustrating an example of the first hinge structure included in the electronic device according to an embodiment.
FIG. 10 is a view illustrating an example of the formation of axes of the first hinge structure in the unfolded state of the first hinge structure included in the electronic device according to an embodiment.
FIG. 11 is a view illustrating the unfolded state and the folded state of the hinge structure included in the electronic device according to an embodiment.
FIGS. 12A and 12B are views illustrating examples of the hinge structure according to an embodiment.
FIG. 13 is a view illustrating an example of a hinge structure according to an embodiment.
FIG. 14A is a front exploded perspective view of the hinge structure according to an embodiment, and FIG. 14B is a rear exploded perspective view of the hinge structure according to an embodiment.
FIG. 15 is a view illustrating an example of a fifth link member of the hinge structure according to an embodiment.
FIG. 16 is a view illustrating an example of a first wing plate and a second wing plate according to an embodiment.
FIG. 17 illustrates an example of a rear view of the wing plates coupled with the hinge structures according to an embodiment.
FIG. 18 illustrates an example of a front view of the wing plates coupled with the hinge structures according to an embodiment.
FIG. 19 is a view illustrating an example of the formation of axes of a third hinge structure in an unfolded state of the electronic device according to an embodiment.
FIG. 20 is a plan view illustrating an example of the third hinge structure according to an embodiment.
FIG. 21 is a view illustrating an example of the formation of axes of the third hinge structure in the unfolded state of the electronic device according to an embodiment.
FIG. 22 is a view illustrating an example of the third hinge structure according to an embodiment.
FIG. 23 is a view illustrating an example of the wing plates coupled with the third hinge structure according to an embodiment.
FIGS. 24A and 24B are views illustrating examples of the third hinge structure according to an embodiment.
FIG. 25 is a view illustrating examples of a plurality of hinge structures connected through center bar bridges according to an embodiment.
FIG. 26 is a view illustrating an example of the third hinge structure according to an embodiment.
FIG. 27 is a view illustrating an example of the third hinge structure according to an embodiment.
FIG. 28 is a view illustrating an example of the hinge structures and the wing plates according to an embodiment.
FIG. 29 is a view illustrating an example of the hinge structures according to an embodiment.
FIG. 30 is a view illustrating an example of the third hinge structure according to an embodiment.

### [ BEST MODE]

Hereinafter, various embodiments of the disclosure will be described with reference to the accompanying drawings.

Embodiments of the disclosure provide a hinge structure for reducing, preventing, or minimizing deterioration in crease quality (i.e. reducing the presence of a crease) of a foldable display by continuously forming a plurality of center bar structures, and a foldable electronic device including the hinge structure.

In addition, embodiments of the disclosure provide a hinge structure for implementing a flex force (i.e. a force required to transition the foldable electronic device between folded/partially folded states) and achieving component efficiency by reducing the size and weight of a hinge structure, and a foldable electronic device including the hinge structure. Furthermore, the robustness of the folding/hinging mechanism may be also retained or any reduction lessened whilst reducing weight and reducing the presence of visible creasing.

Other aspects according to embodiments of the disclosure will be mentioned as needed in a process of describing the embodiments.

Various other aspects and effects provided by the hinge structure and the electronic device including the same according to the various embodiments may be mentioned depending on embodiments in the detailed description of the disclosure.

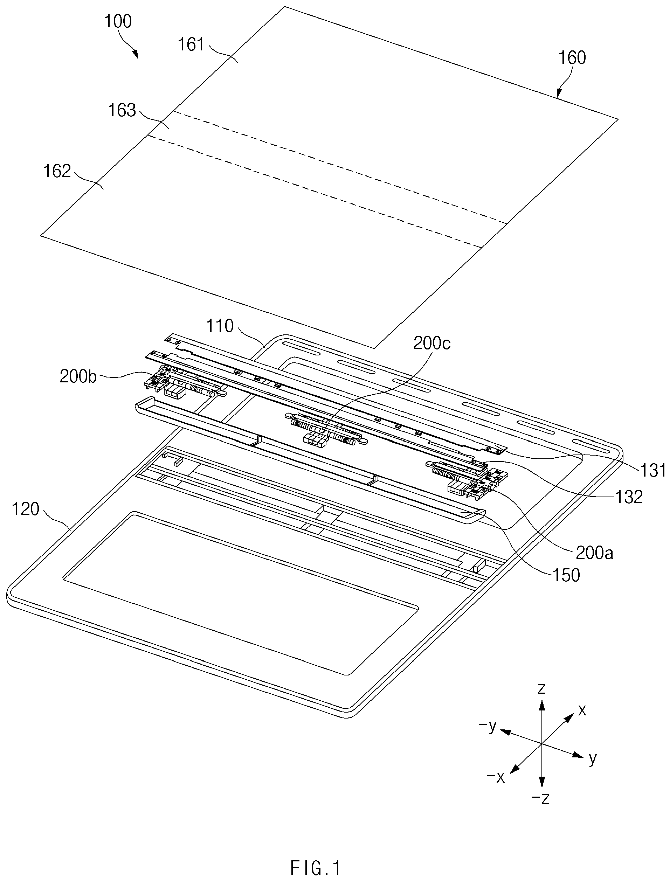

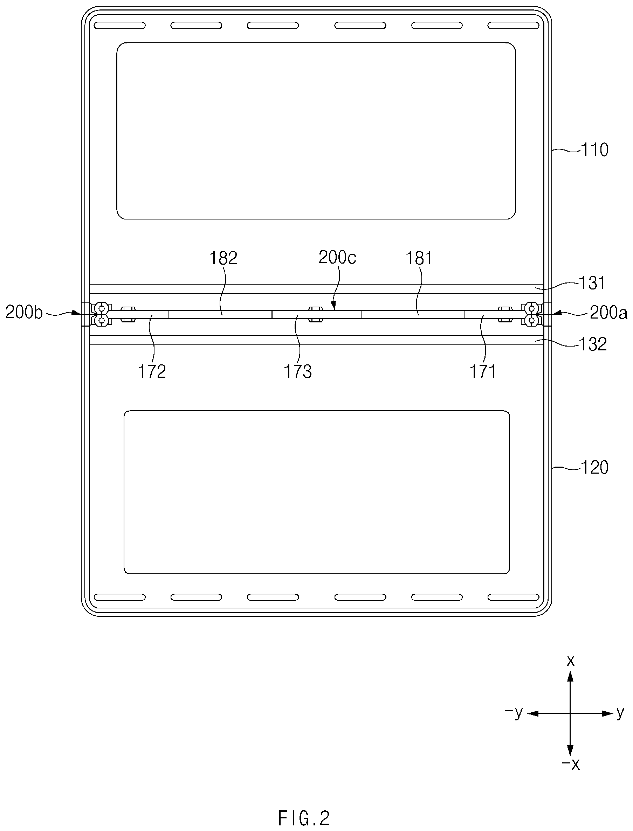

FIG. 1 is an exploded perspective view of an electronic device according to an embodiment, and FIG. 2 is a plan view in which a display of the electronic device is omitted according to an embodiment.

Referring to FIGS. 1 and 2, the electronic device 100 (or, the foldable electronic device, the portable electronic device, the portable communication device, or the portable device) according to an embodiment may include a first housing 110, a second housing 120, a hinge housing 150, center bars 171, 172, and 173 (or, center plates), wing plates 131 and 132 (or, hinge plates), a display 160, and one or more hinge structures 200a, 200b, and 200c. When the electronic device 100 is in a folded state, a folding area of the display 160 may be formed in a water-drop shape (or, a dumbbell shape/teardrop shape) to which the gravity is applied, and thus the electronic device 100 may support securing a folding R (curvature) that prevents a crack or buckling in the folding area of the display 160. In addition, when the electronic device 100 is in the folded state, the dumbbell-shaped folding area of the display may be disposed in a certain space of the housings 110 and 120, and thus a clearance between the housings 110 and 120 disposed in the shape of "11" (i.e. substantially parallel to each other) to face each other may be reduced. Accordingly, the gap between the housings 110 and 120 in the folded state may be reduced, and a reduction in the overall size of the electronic device 100 and interruption or reduction of infiltration of foreign matter between the housings 110 and 120 may be achieved.

The first housing 110 may be connected with the second housing 120 through the one or more hinge structures 200a, 200b, and 200c. The first housing 110 may include a bottom area on which the display 160 is seated and a sidewall or a separate frame that surrounds the periphery of the display 160 or the periphery of the area on which the display 160 is seated. In addition, a back cover may be disposed on the rear surface of the first housing 110. Here, the back cover may be omitted.

At least a portion of the first housing 110 may be attached with at least a portion of a first area 161 of the display 160. Alternatively, at least a portion of the periphery of the front surface (the surface facing in the z-axis direction) of the first housing 110 may be attached with at least a portion of the periphery of the first area 161 of the display 160. In this regard, an adhesive layer may be disposed between the front surface of the first housing 110 and the first area 161 of the display 160.

At least a portion of the inside of the first housing 110 may be provided in a hollow form. At least one of at least one circuit board, at least one battery, or at least one camera module may be disposed in the first housing 110. The circuit board and the battery disposed in the first housing 110 may be electrically connected with an electronic element (e.g., at least one circuit board and at least one battery) disposed in the second housing 120 through a flexible circuit board (not illustrated). For example, the flexible circuit board (not illustrated) may extend from a partial region of the first housing 110 to a partial region of the second housing 120 across the hinge housing 150. A partial region of the flexible circuit board (not illustrated) may be located in the hinge housing 150. For example, a processor and a memory may be disposed on the circuit board disposed in the first housing 110.

At least a portion of the first housing 110 may be formed of a metallic material, or at least a portion of the first housing 110 may be formed of a non-metallic material. The first housing 110 may be formed of a material having a certain magnitude of rigidity to support at least a portion of the display 160. In an embodiment, a portion of the first housing 110 that faces the second housing 120 (or, a portion adjacent to the second housing 120) when the electronic device 100 is in an unfolded state may include a depression, at least a portion of which is recessed such that the hinge housing 150 is disposed therein.

The first housing 110 may be connected to the one or more hinge structures 200a, 200b, and 200c and may perform a rotational motion in the counterclockwise direction (e.g., in the direction when the electronic device 100 is folded) or in the clockwise direction (e.g., in the direction when the electronic device 100 is unfolded) to move from any non-zero point between the -x-axis and the x-axis to any point between the z-axis and the -z-axis by external pressure applied from the outside (e.g., a force applied by a user who holds the first housing 110). In the folded state of the electronic device 100, the first housing 110 may be disposed parallel to the z-axis, or may be disposed parallel to the second housing 120. While the first housing 110 is disposed parallel to the second housing 120, at least a part of three edges of the first housing 110 (e.g., the remaining edges other than the edge adjacent to the second housing 120 in the unfolded state of the electronic device) may be disposed to make contact with three edges of the second housing 120 (e.g., the remaining edges other than the edge adjacent to the first housing 110 in the unfolded state of the foldable electronic device 100).

The second housing 120 may be connected with the first housing 110 through the one or more hinge structures 200a, 200b, and 200c. The second housing 120 may include a front surface (or, a bottom surface) on which at least a portion of the display 160 (e.g., at least a portion of a second area 162) is seated and a sidewall or a separate frame that surrounds the periphery of the front surface of the second housing 120 or the periphery of at least a portion of the second area 162 of the display 160. At least a portion of the second housing 120 may be attached with at least a portion of the second area 162 of the display 160. Alternatively, at least a portion of the periphery of the front surface of the second housing 120 may be attached with the periphery of the second area 162 of the display 160. In this regard, an adhesive layer may be disposed between the front surface of the second housing 120 and the second area 162 of the display 160.

Similarly to the first housing 110, the second housing 120 may have a hollow formed in at least a portion thereof. At least one of at least one circuit board or at least one battery may be disposed in the second housing 120. Alternatively, at least one battery may be disposed in one of the first housing 110 and the second housing 120, or may be disposed in both the first housing 110 and the second housing 120. At least one of the circuit board or the battery disposed in the second housing 120 may be electrically connected with a component (e.g., at least one of the circuit board or the battery) disposed in the first housing 110 through a flexible circuit board.

Similarly to the first housing 110, at least a portion of the second housing 120 may be formed of a metallic material, or at least a portion of the second housing 120 may be formed of a non-metallic material. The second housing 120 may be formed of a material having a certain magnitude of rigidity to support at least a portion of the display 160. In an embodiment, a portion of the second housing 120 that faces the first housing 110 (or, a portion adjacent to the first housing 110) when the electronic device 100 is in the unfolded state may include a depression, at least a portion of which is recessed such that the hinge housing 150 is disposed therein. The depression of the second housing 120 may be disposed adjacent to the depression of the first housing 110. A back cover may be disposed on the rear surface of the second housing 120. Here, the back cover may be omitted.

At least a portion of the hinge housing 150 may be disposed in the depressions formed on the portions of the first housing 110 and the second housing 120 that face each other or are adjacent to each other when the electronic device 100 is in the unfolded state. The hinge housing 150 may be provided in a shape extending longer in the y-axis direction than in the x-axis direction. However, the disclosure is not limited thereto. The hinge housing 150 may have a shape longer in the x-axis direction than in the y-axis direction depending on the type of the electronic device 100. Structures (e.g., bosses or hooks) for fixing the one or more hinge structures 200a, 200b, and 200c may be disposed on partial regions of the inner surface of the hinge housing 150.

At least a portion of the display 160 may have flexibility. For example, the display 160 may include the first area 161 at least partially disposed on the first housing 110, the second area 162 at least partially disposed on the second housing 120, and a third area 163 (or, a bending area or a folding area) located between the first area 161 and the second area 162.

When the electronic device 100 is in the folded or unfolded state, at least portions of the first area 161 and the second area 162 may be disposed in a flat state, and when the electronic device 100 is in the folded state, at least a portion of the third area 163 may have a curved state. For example, the first area 161 and the second area 162 may remain flat regardless of the state of the electronic device 100 (the positions of flat surfaces being changed), and the third area 163 may be deformed to be curved or flat depending on the state of the electronic device 100. For example, when the electronic device 100 is in the unfolded state, the third area 163 may have a planar state (or, a flat state), and when the electronic device 100 is in the folded state, at least a portion of the third area 163 may have a curved state (or, a bent state).

The display 160 may include various layers. For example, the display 160 may include an outer protective layer (or, a glass layer or a polymer layer) having a certain transparency and a specified size, a display panel layer (or, a panel layer, a panel, or a display panel) that is disposed under the outer protective layer and that displays a screen, and at least one first back layer (or, back panel or back portion) disposed under the display panel layer. The first back layer may include at least one of an impact absorbing layer (or, an embo) or a heat radiating layer (or, a metal sheet layer). Additionally or alternatively, the first back layer may further include an electromagnetic induction panel (e.g., a digitizer). The display 160 may further include a second back layer disposed under the first back layer. The second back layer (or, the second back panel or the second back portion) may include at least one metal layer (or, metal sheet), at least a portion of which is formed of a metallic material. The second back layer may include a specified pattern (e.g., a lattice pattern or a slit pattern) such that at least a portion of the second back layer is able to be bent. Alternatively, at least a portion of the second back layer may be formed of another bendable material (e.g., a polymer material, plastic, rubber, or a leather material). At least one of the first back layer or the second back layer may be omitted.

At least portions of the one or more hinge structures 200a, 200b, and 200c may be disposed in/seat on/in the hinge housing 150, and at least some hinge structures (e.g., 200a and 200b) among the plurality of hinge structures 200a, 200b, and 200c may have similar structures and shapes. The structure in which the two hinge structures 200a and 200b having similar shapes and the hinge structure 200c having a shape different from those of the two hinge structures 200a and 200b are disposed on the hinge housing 150 has been described as an example with reference to FIG. 1. However, the disclosure is not limited thereto, and three or more hinge structures 200a and 200b having similar interlocking structures(or, structures in which at least some of the configurations are interconnected and the connected configurations may move together) may be disposed on the hinge housing 150, or two or more hinge structures 200c having a different non-interlocking structures may be mounted on the hinge housing 150. Among the one or more hinge structures 200a, 200b, and 200c, the hinge structures 200a and 200b having similar interlocking structures may perform a hinge operation with respect to M axes (here, M being a natural number of 2 or more) (e.g., eight virtual axes, or six virtual axes and two real axes), and the hinge structure 200c having a different shape may perform a hinge operation with respect to N axes (here, N being a natural number smaller than M) (e.g., six virtual axes, or four virtual axes and two real axes). Virtual axis may refer to axis about which components move/rotate but where there is no physical axle at the axis. Accordingly, the one or more hinge structures 200a, 200b, and 200c may allow the third area 163 of the display 160 to form a dumbbell shape.

The center bars 171, 172, and 173 may be disposed between the display 160 and the hinge structures 200a, 200b, and 200c. For example, among the center bars 171, 172, and 173, the first center bar 171 (or, the first center plate) may be disposed to cover at least a portion of the central area of the first hinge structure 200a (or, the first side hinge structure). Alternatively, the first center bar 171 may be disposed to cover at least a portion of the first hinge structure 200a. For example, the second center bar 172 (or, the second center plate) may be disposed to cover at least a portion of the central area of the second hinge structure 200b (or, the second side hinge structure). Alternatively, the second center bar 172 may be disposed to cover at least a portion of the second hinge structure 200b. For example, the third center bar 173 (or, the third center plate) may be disposed to cover at least a portion of the central area of the third hinge structure 200c (or, the center hinge structure). The third center bar 173 may be disposed to cover at least a portion of the third hinge structure 200c.

The center bars 171, 172, and 173 may be fixed to the hinge structures 200a, 200b, and 200c. Center bar bridges 181 and 182 may be disposed between the center bars 171, 172, and 173. The first center bar bridge 181 may be disposed between the first center bar 171 and the third center bar 173, and the second center bar bridge 182 may be disposed between the second center bar 172 and the third center bar 173. One end (e.g., an end facing in the -y-axis direction) of the first center bar 171 may be fastened and fixed to an opposite end (e.g., an end facing in the y-axis direction) of the first center bar bridge 181. An opposite end of the second center bar 172 may be fastened and fixed to one end of the second center bar bridge 182. An opposite end of the third center bar 173 may be fastened and fixed to one end of the first center bar bridge 181, and one end of the third center bar 173 may be fastened and fixed to an opposite end of the second center bar bridge 182.

The wing plates 131 and 132 may be coupled with the one or more hinge structures 200a, 200b, and 200c and may be disposed to cover at least portions of surfaces of the one or more hinge structures 200a, 200b, and 200c that face in the z-axis direction when the electronic device 100 is in the unfolded state. The wing plates 131 and 132 may be provided in a form separated from the housings 110 and 120. Accordingly, gaps may be formed between the wing plates 131 and 132 and the housings 110 and 120. The wing plates 131 and 132 may be disposed on opposite sides with the center bars 171, 172, and 173 therebetween. For example, the first wing plate 131 may be located in the x-axis direction with respect to the center bars 171, 172, and 173, and the second wing plate 132 may be located in the -x-axis direction with respect to the center bars 171, 172, and 173. The wing plates 131 and 132 may be disposed at the same height or on the same xy-plane as the center bars 171, 172 and 173 with respect to the z-axis in a state of being coupled with the hinge structures 200a, 200b, and 200c. The wing plates 131 and 132 may rotate in the clockwise or counterclockwise direction depending on hinge operations of the one or more hinge structures 200a, 200b, and 200c. For example, while the first wing plate 131 rotates in the counterclockwise direction, the second wing plate 132 may rotate in the clockwise direction, and while the first wing plate 131 rotates in the clockwise direction, the second wing plate 132 may rotate in the counterclockwise direction. The first wing plate 131 may support a first flat surface of the third area 163 of the display 160 that is folded in a dumbbell shape (or, a water-drop shape to which the gravity is applied), and the second wing plate 132 may support a second flat surface (a surface symmetrical to the first surface with respect to the z-axis) of the third area 163 of the display 160 that is folded in a dumbbell shape.

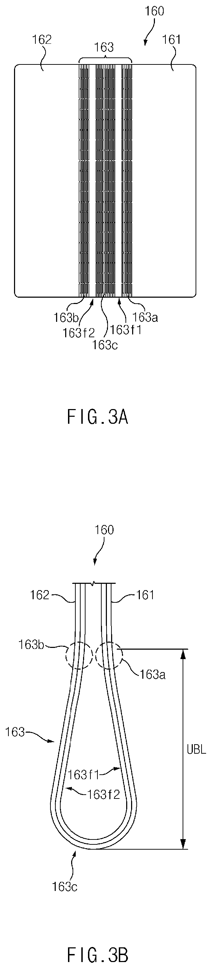

FIGS. 3A and 3B are views illustrating an example of the structure of the display of the electronic device according to an embodiment. FIG. 3A is a view illustrating an unfolded state of the display of the electronic device, and FIG. 3B is a view illustrating a folded state of the display of the electronic device. Lattice areas 163a, 163b, and 163c illustrated in FIG. 3A are for convenience of description, and when the display is placed on the lattice areas 163a, 163b, and 163c, the corresponding lattice areas 163a, 163b, and 163c may not be observed from the front. Furthermore, in FIG. 3B, for convenience of description, the areas 161, 162, 163 of the display 160 are indicated, and a structure represented by double layers in FIG. 3B may mean a panel layer (e.g., a layer located inside in FIG. 3B) and a support layer or a support substrate (e.g., a layer located outside in FIG. 3B) that supports the panel layer and in which the lattice areas 163a, 163b, and 163c are formed.

Referring to FIGS. 1 to 3B, the display 160 of the electronic device 100 may include the first area 161 (or, the first portion or the first position), the second area 162 (or, the second portion or the second position), and the third area 163 (or, the third portion, the third position, or the folding area). The first to third areas 161, 162, and 163 may be connected with each other. The third area 163 is disposed between the first area 161 and the second area 162. Accordingly, one side of the third area 163 (e.g., the right edge with respect to the illustrated drawing) is connected with the left edge of the first area 161, and an opposite side of the third area 163 (e.g., the left edge with respect to the illustrated drawing) is connected with the right edge of the second area 162. Based on the horizontal direction of the illustrated drawing, the widths of the first area 161 and the second area 162 may be the same as, or similar to, each other. The third area 163 may have a width that is the same as or similar to the width of the first area 161 or the second area 162, or may have a narrower width than the first area 161 or the second area 162. Based on the vertical direction of the illustrated drawing, the first area 161, the second area 162, and the third area 163 may have the same length.

The third area 163 may be an area that is folded when the electronic device 100 is in the folded state. All or part of a panel protection layer disposed under the third area 163 (or, at least one back layer disposed under the panel protection layer) may include a lattice pattern. Referring to the illustrated drawing, the third area 163 may form a water-drop shape (or, a dumbbell shape) that is fallen by the gravity in the direction from the upper side to the lower side based on the illustrated drawing. In this regard, the third area 163 may include the convex area 163c that is convex in the lower direction, flat areas 163f1 and 163f2 extending from opposite sides of the convex area 163c to the boundaries (or, edges) of the first area 161 and the second area 162, and the curved areas 163a and 163b formed between the flat areas 163f1 and 163f2 and the first and second areas 161 and 162 (the areas having a reverse curvature when viewed in the direction in which the convex area 163c is curved). The curved areas 163a and 163b may have a curvature in a direction different from the direction in which the convex area 163c is convex. The length UBL of the folding portion (or, the third area 163 or the folding area) of the display 160 may include the length from the curved areas 163a and 163b to an end point of the convex area 163c (the lowermost point of the convex area 163c). The length UBL of the folding portion may affect the positions and thicknesses of the center bars 171, 172, and 173, the positions, widths, and the thicknesses of the wing plates 131 and 132, and the sizes of the depressions of the first housing 110 and the second housing 120 described with reference to FIG. 1.

The bending direction of a lattice pattern corresponding to the convex area 163c may be different from the bending directions of lattice patterns corresponding to the curved areas 163a and 163b. For example, the convex area 163c may be convexly curved in the rear direction from the direction in which the screen of the display 160 is displayed, and the curved areas 163a and 163b may be convexly curved from the rear direction of the display 160 to the direction in which the screen of the display 160 is displayed. A lattice pattern may not be included in the panel protection layer corresponding to the flat areas 163f1 and 163f2. The lattice patterns formed in the curved areas 163a and 163b and the lattice pattern formed in the convex area 163c may have the same shape or similar shapes. For example, the lattice patterns formed in the curved areas 163a and 163b may include at least one of a half etching type (e.g., a type in which grooves are formed in a certain pattern on a surface of a metal layer) or an etching hole type (e.g., a type in which a plurality of holes or empty spaces penetrating the front and rear surfaces of a metal layer are arranged in a certain pattern). Alternatively, one of the lattice patterns of the curved areas 163a and 163b may be formed in a half etching type, and the other one of the lattice patterns of the curved areas 163a and 163b may be formed in an etching hole type. According to an embodiment, the etched shape may be omitted. As the lattice pattern of the convex area 163c has a higher curvature than the curved areas 163a and 163b, a lattice pattern different from the lattice patterns of the curved areas 163a and 163b may be formed in the convex area 163c such that the convex area 163c takes a more flexible shape. For example, at least one of the etching size or the etching depth of the lattice pattern of the convex area 163c may be greater than those of the curved areas 163a and 163b, and the gap between patterns (e.g., grooves or holes) may be smaller than those of the curved areas 163a and 163b.

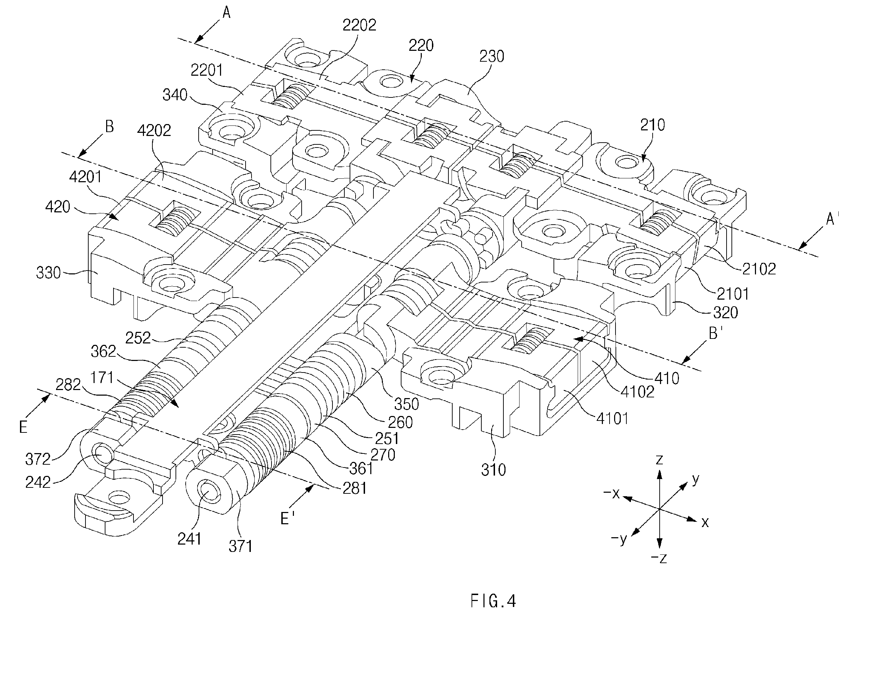

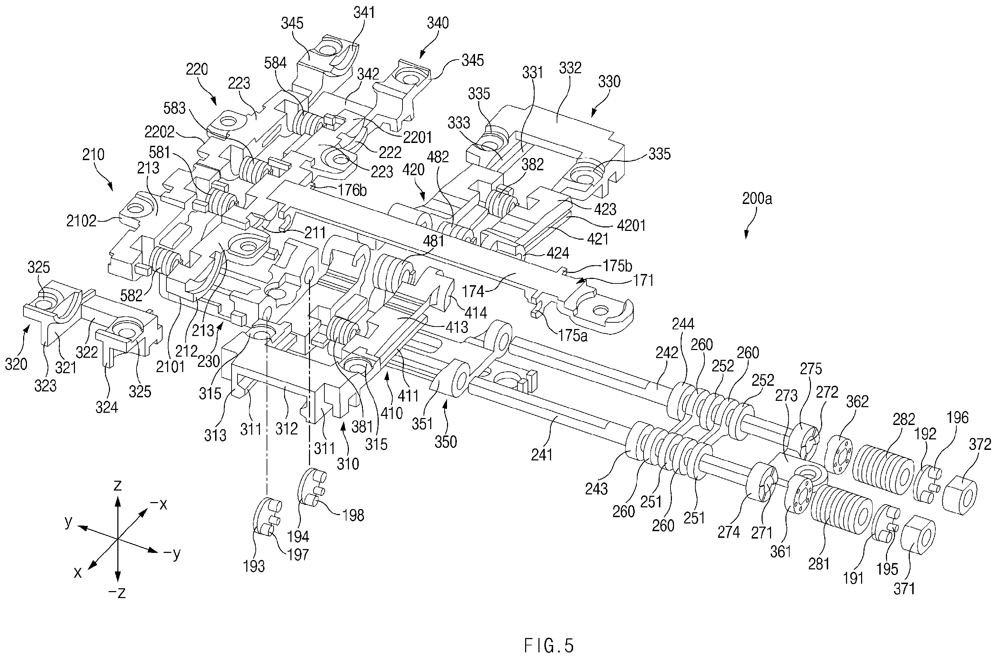

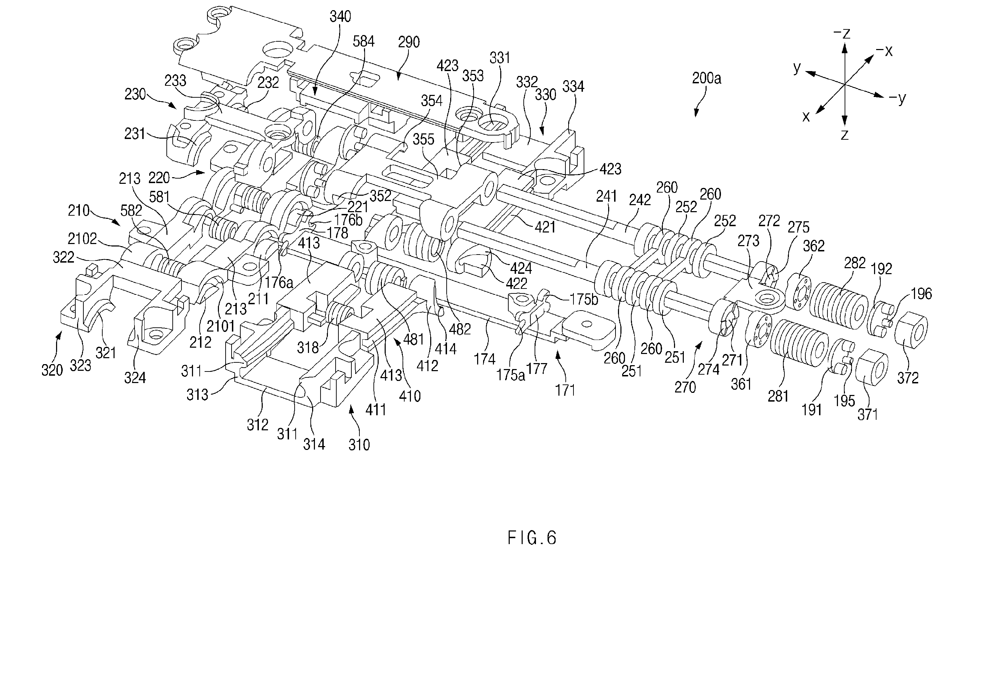

FIG. 4 is a view illustrating an example of a hinge structure according to an embodiment. FIG. 5 is a front exploded perspective view of the hinge structure according to an embodiment. FIG. 6 is a rear exploded perspective view of the hinge structure according to an embodiment. Among the hinge structures 200a, 200b, and 200c described above with reference to FIGS. 1 and 2, the first hinge structure 200a will be described below with reference to FIGS. 4 to 6. The first hinge structure 200a may have the same structure and configuration as the second hinge structure 200b.

Referring to FIGS. 1 to 6, the first hinge structure 200a may include a fixed bracket 230 (or, a center bracket), a first rotating member 210 (or, a first rotating structure or a first rotating body), a second rotating member 220 (or, a second rotating structure or a second rotating body), a first link member 310 (or, a first slide link, a first rotation support structure, or a first arm link member), a second link member 320 (or, a second slide link, a second rotation support structure, or a first rotation link member), a third link member 330 (or, a third slide link, a third rotation support structure, or a second arm link member), a fourth link member 340 (or, a fourth slide link, a fourth rotation support structure, or a second rotation link member), a first arm member 410 (or, a first arm structure or a first arm), a second arm member 420 (or, a second arm structure or a second arm), a first interlocking member 350, and the first center bar 171.

At least one of the components included in the above-described first hinge structure 200a may be omitted. For example, the first rotating member 210 and the second rotating member 220 may be directly coupled to the housings 110 and 120, and the arm members 410 and 420 may be coupled to the rotating members 210 and 220 and may rotate in response to rotation of the rotating members 210 and 220.

The fixed bracket 230 may include a bracket body 233, a first rail 231 (or, a first fixed rail), and a second rail 232 (or, a second fixed rail). The bracket body 233 may include, on one side thereof (e.g., on a sidewall facing in the - y-axis direction), grooves in which edges (e.g., +y-axis edges) of a first shaft 241 and a second shaft 242 are mounted.

At least a portion of the fixed bracket 230 may be seated on and fixed to one side of the hinge housing 150. For example, the fixed bracket 230 may be fixed to the -y-axis edge or the y-axis edge of the hinge housing 150. The fixed bracket 230 may include structures (e.g., the first rail 231 and the second rail 232) to which a portion of the first rotating member 210 (e.g., a first rail structure 211) and a portion of the second rotating member 220 (e.g., a third rail structure 221) are fastened so as to be rotatable.

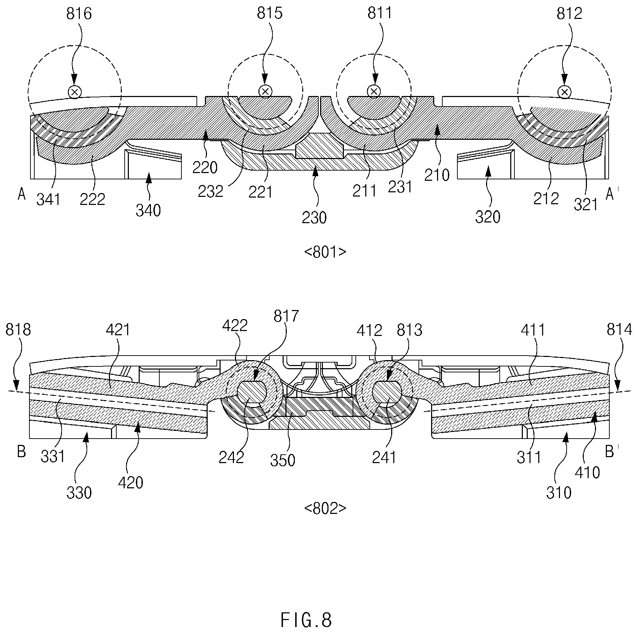

The first rail 231 of the fixed bracket 230 forms a virtual axis (e.g., a first axis (e.g., a first axis 811 of FIG. 8), a first virtual axis, or a first fixed axis) about which the first rail structure 211 of the first rotating member 210 is able to rotate in place. The first rail 231 may be formed in a structure corresponding to the first rail structure 211. For example, the first rail 231 may include two rails having an arc shape or a half-moon shape. A portion of an opposite side of the first rotating member 210 (e.g., a second rail structure 212) may perform a rotational motion or a curved sliding motion with respect to a second axis (e.g., a second axis 812 of FIG. 8, a second virtual axis, or a first moving axis) different from the first axis. The second rail 232 forms a virtual axis (e.g., a fifth axis 815 of FIG. 8, a third virtual axis, or a second fixed axis) about which the third rail structure 221 of the second rotating member 220 is able to rotate in place. A portion of an opposite side of the second rotating member 220 (e.g., a fourth rail structure 222) may perform a rotational motion or a curved sliding motion with respect to a sixth axis (e.g., a sixth axis 816 of FIG. 8, a fourth virtual axis, or a second moving axis) different from the fifth axis.

The fixed bracket 230 may be formed of a material having a certain rigidity (e.g., a metallic material or reinforced plastic having a certain rigidity) so as to support movements of the first rotating member 210 and the second rotating member 220 in a hinge operation process (an operation in which the angle between the first housing 110 and the second housing 120 is changed from 0 degrees to 180 degrees or the first housing 110 and the second housing 120 are mounted at a specific angle between 0 degrees and 180 degrees). In the above description, the structure in which the fixed bracket 230 is fixed to the hinge housing 150 is illustrated. However, one shape of the hinge housing 150 may be provided in the shape of the fixed bracket 230.

The first rotating member 210 may include a first sub-rotating member 2101 and a second sub-rotating member 2102 facing the first sub-rotating member 2101 in the y-axis direction. At least a portion of the first sub-rotating member 2101 may be formed to be symmetrical to at least a portion of the second sub-rotating member 2102. The first sub-rotating member 2101 and the second sub-rotating member 2102 may be coupled with a first rotating elastic member 581 and a second rotating elastic member 582 therebetween. The first rotating elastic member 581 may be coupled between the first rail structure 211 of the first sub-rotating member 2101 and the first rail structure 211 of the second sub-rotating member 2102. The second rotating elastic member 582 may be coupled between the second rail structure 212 of the first sub-rotating member 2101 and the second rail structure 212 of the second sub-rotating member 2102. The first rotating elastic member 581 and the second rotating elastic member 582 may be elastically deformed in the process in which the first sub-rotating member 2101 and the second sub-rotating member 2102 are coupled.

At least one of the first sub-rotating member 2101 or the second sub-rotating member 2102 may include a first rotating body 213, the first rail structure 211 (or, the first rotating rail structure) disposed in the -x-axis direction of the first rotating body 213, and the second rail structure 212 (or, the second rotating rail structure) disposed in the x-axis direction of the first rotating body 213. Alternatively, the first rotating member 210 may include a portion (e.g., the first rail structure 211) fastened to one side (e.g., the first rail 231) of the fixed bracket 230 and thereafter fastened to perform a hinge motion and a portion (e.g., the second rail structure 212) coupled to one side (e.g., a fourth rail 321) of the second link member 320.

The first rail structure 211 of the first rotating member 210 fastened with the fixed bracket 230 may rotate in place (e.g., in the counterclockwise or clockwise direction) while the second link member 320 coupled to the first housing 110 performs a hinge operation (e.g., a rotation operation in the counterclockwise or clockwise direction). The second rail structure 212 coupled to the second link member 320 may rotate (or, slide) within the second link member 320 (e.g., the fourth rail 321) while moving in one direction (e.g., in the counterclockwise direction while the electronic device 100 is folded in the unfolded state or in the clockwise direction while the electronic device 100 is unfolded in the folded state).

The first rotating body 213 may include a structure coupled with the first wing plate 131 (e.g., at least one hole penetrating the first rotating body 213 in the up-down direction (the z-axis direction and the -z-axis direction)). The first rotating member 210 may make frictional contact with the fixed bracket 230 and the second link member 320 while a hinge operation is repeated. The first rotating member 210 may be formed of a material (e.g., a metallic material) that has a certain strength or higher and is capable of withstanding the friction. A portion of the first wing plate 131 may be fixed to the first rotating member 210.

The second rotating member 220 may include a third sub-rotating member 2201 and a fourth sub-rotating member 2202 facing the third sub-rotating member 2201 in the y-axis direction. The third sub-rotating member 2201 and the fourth sub-rotating member 2202 may be coupled with a third rotating elastic member 583 and a fourth rotating elastic member 584 therebetween. The third rotating elastic member 583 may be coupled between the third rail structure 221 (or, the third rotating rail structure) of the third sub-rotating member 2201 and the third rail structure 221 of the fourth sub-rotating member 2202. The fourth rotating elastic member 584 may be coupled between the fourth rail structure 222 (or, the fourth rotating rail structure) of the third sub-rotating member 2201 and the fourth rail structure 222 of the fourth sub-rotating member 2202. The third rotating elastic member 583 and the fourth rotating elastic member 584 may be elastically deformed in the process in which the third sub-rotating member 2201 and the fourth sub-rotating member 2202 are coupled.

The second rotating member 220 may include a second rotating body 223, the third rail structure 221 disposed in the x-axis direction of the second rotating body 223, and the fourth rail structure 222 disposed in the -x-axis direction of the second rotating body 223. Alternatively, the second rotating member 220 may include a portion (e.g., the third rail structure 221) fastened to an opposite side (e.g., the second rail 232) of the fixed bracket 230 and thereafter fastened to perform a hinge motion and a portion (e.g., the fourth rotating rail structure 222) coupled to one side (e.g., a sixth rail 341) of the fourth link member 340. The third rail structure 221 of the second rotating member 220 fastened with the fixed bracket 230 may rotate in place while the fourth link member 340 coupled to the second housing 120 performs a hinge operation (e.g., a rotation operation in the counterclockwise or clockwise direction). The fourth rotating rail structure 222 of the second rotating member 220 coupled to the fourth link member 340 may rotate (or, slide) within the fourth link member 340 (e.g., the sixth rail 341) while moving in one direction (e.g., in the counterclockwise direction while the electronic device 100 is folded in the unfolded state or in the clockwise direction while the electronic device 100 is unfolded in the folded state).

The second rotating body 223 may include a structure coupled with the second wing plate 132 (e.g., at least one hole penetrating the second rotating body 223 in the up-down direction). Similarly to the first rotating member 210, the second rotating member 220 may make frictional contact with the fixed bracket 230 and the fourth link member 340 while a hinge operation is repeated. The second rotating member 220 may be formed of a material (e.g., a metallic material) that has a certain strength or higher and is capable of withstanding the friction. For example, the second rotating member 220 may be formed of the same material as that of the first rotating member 210. A portion of the second wing plate 132 may be fixed to the second rotating member 220.

The second rotating member 220 may perform a motion in the direction opposite to that of the first rotating member 210. For example, the third rail structure 221 of the second rotating member 220 may rotate in place in the clockwise direction while the first rail structure 211 of the first rotating member 210 rotates in place in the counterclockwise direction.

While the second rail structure 212 of the first rotating member 210 rotates in the counterclockwise direction, the second rail structure 212 may slide in the counterclockwise direction within the fourth rail 321 (or, the second link rail or a first rotating rail) of the second link member 320 (the sliding operation is relative, and therefore the fourth rail 321 of the second link member 320 slides relative to the second rail structure 212 in the clockwise direction). While the second rail structure 212 slides while rotating, the fourth rotating rail structure 222 of the second rotating member 220 may rotate in the counterclockwise direction and may slide in the counterclockwise direction within the sixth rail 341 of the fourth link member 340 (the sliding operation is relative, and therefore the sixth rail 341 of the fourth link member 340 slides in the clockwise direction relative to the fourth rotating rail structure 222).

The first axis about which the first rail structure 211 of the first rotating member 210 rotates and the fifth axis about which the third rail structure 221 of the second rotating member 220 rotates may be fixed axes about which the rail structures (the first rail structure 211 and the third rail structure 221) rotate in place. The first axis (or, the first axis 811 of FIG. 8) may be a virtual axis that the first rail structure 211 forms while rotating along the first rail 231 of the fixed bracket 230. The fifth axis (or, the fifth axis 815 of FIG. 8) may be a virtual axis that the third rail structure 221 forms while rotating along the second rail 232 of the fixed bracket 230.

The second axis about which the second rail structure 212 of the first rotating member 212 rotates and the sixth axis about which the fourth rotating rail structure 222 of the second rotating member 222 rotates may be moving axes formed while the rail structures (the second rail structure 212 and the fourth rotating rail structure 222) move. The second axis (or, the second axis 812 of FIG. 8) may be a virtual axis formed by the second rail structure 212 sliding or rotating within the fourth rail 321 while the second link member 320 moves. The sixth axis (or, the sixth axis 816 of FIG. 8) may be a virtual axis formed by the fourth rail structure 222 sliding or rotating within the sixth rail 341 while the fourth link member 340 moves.

The first link member 310 may fix the first arm member 410 to the first housing 110 and may support a rotation operation (or, a sliding operation) of the first arm member 410. The first link member 310 includes a structure on which a portion of the first arm member 410 is seated. The first link member 310 may include a first link body 312, and an eleventh link sidewall 313 and a twelfth link sidewall 314 that extend in the z-axis direction from opposite sides (e.g., y-axis and -y-axis edges) of the first link body 312. An empty space may be formed between the eleventh link sidewall 313 and the twelfth link sidewall 314, and a third rail 311 (or, a first arm rail or a first link rail) protruding toward the empty space between the eleventh link sidewall 313 and the twelfth link sidewall 314 may be formed on each of the eleventh link sidewall 313 and the twelfth link sidewall 314. The third rail 311 may be fastened to a fifth rail structure 411 (or, a first arm rail structure) of the first arm member 410. The fifth rail structure 411 of the first arm member 410 may be seated in the empty space, and a rotation or sliding operation of the fifth rail structure 411 may be guided.

The first link member 310 may include at least one first link connecting part 315 where a structure (e.g., at least one hole or groove) used to fix the first link member 310 to the first housing 110 is formed. The first link connecting part 315 may protrude from one side of the first link body 312 (e.g., the eleventh link sidewall 313) in the y-axis direction and/or may protrude from an opposite side of the first link body 312 (e.g., the twelfth link sidewall 314) in the -y-axis direction.

The second link member 320 may fix the first rotating member 210 to the first housing 110 and may support a rotation operation (or, a sliding operation) of the first rotating member 210. The second link member 320 includes a structure on which a portion of the first rotating member 210 is seated. The second link member 320 may include a second link body 322, and a 21^{st} link sidewall 323 and a 22^{nd} link sidewall 324 that extend in the z-axis direction from opposite sides (e.g., y-axis and -y-axis edges) of the second link body 322. An empty space may be formed between the 21^{st} link sidewall 323 and the 22^{nd} link sidewall 324, and the fourth rail 321 protruding toward the empty space between the 21^{st} link sidewall 323 and the 22^{nd} link sidewall 324 may be formed on each of the 21^{st} link sidewall 323 and the 22^{nd} link sidewall 324. The fourth rail 321 may be fastened to the second rail structure 212 of the first rotating member 210. The second rail structure 212 of the first rotating member 210 may be seated in the empty space, and a rotation or sliding operation of the second rail structure 212 may be guided.

The second link member 320 may include at least one second link connecting part 325 where a structure (e.g., at least one hole or groove) used to fix the second link member 320 to the first housing 110 is formed. The second link connecting part 325 may protrude from one side of the second link body 322 (e.g., the 21^{st} link sidewall 323) in the y-axis direction and/or may protrude from an opposite side of the second link body 322 (e.g., the 22^{nd} link sidewall 324) in the -y-axis direction.

The third link member 330 may fix the second arm member 420 to the second housing 120 and may support a rotation operation (or, a sliding operation) of the second arm member 420. The third link member 330 may fix the second arm member 420 to the second housing 120 and may support a rotation operation (or, a sliding operation) of the second arm member 420. The third link member 330 includes a structure on which a portion of the second arm member 420 is seated. The third link member 330 may include a third link body 332, and a 31^{st} link sidewall 333 and a 32^{nd} link sidewall 334 that extend in the z-axis direction from opposite sides (e.g., y-axis and -y-axis edges) of the third link body 332. An empty space may be formed between the 31^{st} link sidewall 333 and the 32^{nd} link sidewall 334, and a fifth rail 331 (or, a third link rail or a second arm rail) protruding toward the empty space between the 31^{st} link sidewall 333 and the 32^{nd} link sidewall 334 may be formed on each of the 31^{st} link sidewall 333 and the 32^{nd} link sidewall 334. The fifth rail 331 may be fastened to a sixth rail structure 421 (or, a second arm rail structure) of the second arm member 420. The sixth rail structure 421 of the second arm member 420 may be seated in the empty space, and a rotation or sliding operation of the sixth rail structure 421 may be guided.

The third link member 330 may include at least one third link connecting part 335 where a structure (e.g., at least one hole or groove) used to fix the third link member 330 to the second housing 120 is formed. The third link connecting part 335 may protrude from one side of the third link body 332 (e.g., the 31^{st} link sidewall 333) in the y-axis direction and/or may protrude from an opposite side of the third link body 332 (e.g., the 32^{nd} link sidewall 334) in the -y-axis direction.

The fourth link member 340 may fix the second rotating member 220 to the second housing 120 and may support a rotation operation (or, a sliding operation) of the second rotating member 220. The fourth link member 340 includes a structure on which a portion of the second rotating member 220 is seated. The fourth link member 340 may include a fourth link body 342, and a 41^{st} link sidewall 343 and a 42^{nd} link sidewall 344 that extend in the z-axis direction from opposite sides (e.g., y-axis and -y-axis edges) of the fourth link body 342. An empty space may be formed between the 41^{st} link sidewall 343 and the 42^{nd} link sidewall 344, and the sixth rail 341 (or, the fourth link rail or the second rotating rail) protruding toward the empty space between the 41^{st} link sidewall 343 and the 42^{nd} link sidewall 344 may be formed on each of the 41^{st} link sidewall 343 and the 42^{nd} link sidewall 344. The sixth rail 341 may be fastened to the fourth rail structure 222 of the second rotating member 220. The fourth rail structure 222 of the second rotating member 220 may be seated in the empty space, and a rotation or sliding operation of the fourth rail structure 222 may be guided.

The fourth link member 340 may include at least one fourth link connecting part 345 where a structure (e.g., at least one hole or groove) used to fix the fourth link member 340 to the second housing 120 is formed. The fourth link connecting part 345 may protrude from one side of the fourth link body 342 (e.g., the 41^{st} link sidewall 343) in the y-axis direction and/or may protrude from an opposite side of the fourth link body 342 (e.g., the 42^{nd} link sidewall 344) in the -y-axis direction.

The first arm member 410 includes a structure (e.g., the fifth rail structure 411 or the first arm rail structure) fastened with the first link member 310 coupled with the first housing 110. The fifth rail structure 411 may perform a sliding operation in the clockwise and counterclockwise directions within the third rail 311 formed in the first link member 310.

The first arm member 410 may include a first sub-arm member 4101 and a second sub-arm member 4102 facing the first sub-arm member 4101 in the y-axis direction. At least a portion of the first sub-arm member 4101 may be formed to be symmetrical to at least a portion of the second sub-arm member 4102. At least one of the first sub-arm member 4101 or the second sub-arm member 4102 may include a first arm body 413 and a first shaft mounting part 412 that extends from the first arm body 413 in the -x-axis direction and that is fastened to the first shaft 241. A hole may be formed through the first shaft mounting part 412 in the y-axis or -y-axis direction such that the first shaft 241 is mounted therein.

The first sub-arm member 4101 and the second sub-arm member 4102 may be coupled with a first arm elastic member 381 and a first interlocking elastic member 481 therebetween. The first arm elastic member 381 may be coupled between the fifth rail structure 411 of the first sub-arm member 4101 and the fifth rail structure 411 of the second sub-arm member 4102. The first interlocking elastic member 481 may be coupled between the first shaft mounting part 412 of the first sub-arm member 4101 and the first shaft mounting part 412 of the second sub-arm member 4102. The first arm elastic member 381 and the first interlocking elastic member 481 may be elastically deformed in the process in which the first sub-arm member 4101 and the second sub-arm member 4102 are coupled.

The first shaft mounting part 412 may include spiral structures 414 and 415 engaged with the first interlocking member 350. The first shaft mounting part 412 of the first sub-arm member 4101 may include the 21^{st} spiral structure 414 engaged with an eleventh spiral structure 351 of the first interlocking member 350. The 21^{st} spiral structure 414 may be disposed on a sidewall of the first shaft mounting part 412 of the first sub-arm member 4101 that faces in the -y-axis direction. The first shaft mounting part 412 of the second sub-arm member 4102 may include the 22^{nd} spiral structure 415 engaged with a twelfth spiral structure 352 of the first interlocking member 350. The 22^{nd} spiral structure 415 may be disposed on a sidewall of the first shaft mounting part 412 of the second sub-arm member 4102 that faces in the y-axis direction.

The 21^{st} spiral structure 414 and the 22^{nd} spiral structure 415 formed on the first arm member 410 may be fastened to the eleventh spiral structure 351 and the twelfth spiral structure 352 of the first interlocking member 350. The 21^{st} spiral structure 414 and the 22^{nd} spiral structure 415 may rotate depending on rotation of the first arm member 410, and the first interlocking member 350 having the eleventh spiral structure 351 and the twelfth spiral structure 352 formed thereon may perform a linear motion in the y-axis direction (or, in a direction parallel to the direction in which the display 160 is folded) in response to the rotation of the 21^{st} spiral structure 414 and the 22^{nd} spiral structure 415. The first arm member 410 may rotate about the real axis of the first shaft 241 in the clockwise and counterclockwise directions.

The second arm member 420 includes a structure (e.g., the sixth rail structure 421) fastened with the third link member 330 coupled with the second housing 120. The sixth rail structure 421 may perform a sliding operation in the clockwise and counterclockwise directions within the fifth rail 331 formed in the third link member 330.

The second arm member 420 may include a third sub-arm member 4201 and a fourth sub-arm member 4202 facing the third sub-arm member 4201 in the y-axis direction. At least a portion of the third sub-arm member 4201 may be formed to be symmetrical to at least a portion of the fourth sub-arm member 4202. At least one of the third sub-arm member 4201 or the fourth sub-arm member 4202 may include a second arm body 423 and a second shaft mounting part 422 that extends from the second arm body 423 in the x-axis direction and that is fastened to the second shaft 242. A hole may be formed through the second shaft mounting part 422 in the y-axis or -y-axis direction such that the second shaft 242 is mounted therein.

The third sub-arm member 4201 and the fourth sub-arm member 4202 may be coupled with a second arm elastic member 382 and a second interlocking elastic member 482 therebetween. The second arm elastic member 382 may be coupled between the sixth rail structure 421 of the third sub-arm member 4201 and the sixth rail structure 421 of the fourth sub-arm member 4202. The second interlocking elastic member 482 may be coupled between the second shaft mounting part 422 of the third sub-arm member 4201 and the second shaft mounting part 422 of the fourth sub-arm member 4202. The second arm elastic member 382 and the second interlocking elastic member 482 may be elastically deformed in the process in which the third sub-arm member 4201 and the fourth sub-arm member 4202 are coupled.

The second shaft mounting part 422 may include spiral structures 424 and 425 engaged with the first interlocking member 350. The second shaft mounting part 422 of the third sub-arm member 4201 may include the 23^{rd} spiral structure 424 engaged with a thirteenth spiral structure 353 of the first interlocking member 350. The 23^{rd} spiral structure 424 may be disposed on a sidewall of the second shaft mounting part 422 of the third sub-arm member 4201 that faces in the -y-axis direction. The second shaft mounting part 422 of the fourth sub-arm member 4202 may include the 24^{th} spiral structure 425 engaged with a fourteenth spiral structure 354 of the first interlocking member 350. The 24^{th} spiral structure 425 may be disposed on a sidewall of the second shaft mounting part 422 of the fourth sub-arm member 4202 that faces in the y-axis direction. The second arm member 420 including the third sub-arm member 4201 and the fourth sub-arm member 4202 may rotate about the real axis of the second shaft 242 in the clockwise and counterclockwise directions.

The 23^{rd} spiral structure 424 and the 24^{th} spiral structure 425 formed on the second arm member 420 may be fastened to the thirteenth spiral structure 353 and the fourteenth spiral structure 354 of the first interlocking member 350. The 23^{rd} spiral structure 424 and the 24^{th} spiral structure 425 may rotate depending on rotation of the second arm member 420, and the first interlocking member 353 having the thirteenth spiral structure 353 and the fourteenth spiral structure 354 formed thereon may perform a linear motion in the y-axis direction (or, in a direction parallel to the direction in which the display 160 is folded) in response to the rotation of the 23^{rd} spiral structure 424 and the 24^{th} spiral structure 425. The second arm member 420 may rotate about the real axis of the second shaft 242 in the clockwise and counterclockwise directions.

The first interlocking member 350 may include a first interlocking body 355 and the plurality of spiral structures 351, 352, 353, and 354 extending from the first interlocking body 355. At least a portion of the first arm member 410 and at least a portion of the second arm member 420 may be seated on and fixed to the first interlocking body 355. For example, the first shaft mounting part 412 of the first arm member 410 and the second shaft mounting part 422 of the second arm member 420 may be seated on and fixed to the first interlocking body 355. The plurality of spiral structures 351, 352, 353, and 354 may include the eleventh spiral structure 351 and the twelfth spiral structure 352 that extend from the first interlocking body 355 in the x-axis direction and the thirteenth spiral structure 353 and the fourteenth spiral structure 354 that extend from the first interlocking body 355 in the -x-axis direction. Each of the eleventh spiral structure 351 and the twelfth spiral structure 352 may include, in the center thereof, a hole through which the first shaft 241 passes, and each of the thirteenth spiral structure 353 and the fourteenth spiral structure 354 may include, in the center thereof, a hole through which the second shaft 242 passes.

The fixed bracket 230 may include the bracket body 233, the first rail 231 (or, the first fixed rail), and the second rail 232 (or, the second fixed rail). The bracket body 233 may have, on one side thereof (e.g., on a sidewall facing in the -y-axis direction), grooves in which edges (e.g., +y-axis edges) of the first shaft 241 and the second shaft 242 are mounted.

At least a portion of the fixed bracket 230 may be seated on and fixed to one side of the hinge housing 150. For example, the fixed bracket 230 may be fixed to the -y-axis edge or the y-axis edge of the hinge housing 150. The fixed bracket 230 may include structures (e.g., the first rail 231 and the second rail 232) to which a portion of the first rotating member 210 (e.g., the first rail structure 211) and a portion of the second rotating member 220 (e.g., the third rail structure 221) are fastened so as to be rotatable.

The first shaft 241 and the second shaft 242 may be fixed to stoppers 243 and 244 and may be disposed to penetrate one or more first torque brackets 260, a plurality of ring structures 251 and 252, at least one first shaft bracket 270, cam members 361 and 362, a plurality of elastic members 281 and 282, a plurality of center bar brackets 191 and 192, and/or coupling members 371 and 372. For example, the first shaft 241 may sequentially penetrate the first torque bracket 260, the first washer ring 251, the first torque bracket 260, the first washer ring 251, the first shaft bracket 270, the first cam 361, the first elastic member 281, the first center bar bracket 191, and the first coupling member 371 with respect to the first stopper 243. The second shaft 242 may sequentially penetrate the first torque bracket 260, the second washer ring 252, the first torque bracket 260, the second washer ring 252, the first shaft bracket 270, the second cam 362, the second elastic member 282, the second center bar bracket 192, and the second coupling member 372 with respect to the second stopper 244.

The plurality of first torque brackets 260 may be provided. The first washer rings 251 and the second washer rings 252 may alternate with the first torque brackets 260. The first shaft brackets 260 may include holes into which the first and second shafts 241 and 242 are inserted. The first shaft brackets 260 may be disposed between the first stopper 243 of the first shaft 241 and the first washer ring 251 and between the second stopper 244 of the second shaft 242 and the second washer ring 252. The first torque brackets 260 may be disposed between the first washer rings 251 and between the second washer rings 252.

Second surfaces (e.g., surfaces facing in the y-axis direction) of the first washer ring 251 and the second washer ring 252 disposed between the first torque brackets 260 may press first surfaces (e.g., surfaces facing in the -y-axis direction) of the first torque brackets 260 by the elastic forces of the elastic members 281 and 282 and may be brought into close contact with the first surfaces of the first torque brackets 260. Second surfaces (e.g., surfaces facing in the y-axis direction) of the first torque brackets 260 disposed between the first washer rings 251 and between the second washer rings 252 may press first surfaces (e.g., surfaces facing in the -y-axis direction) of the first washer ring 251 and the second washer ring 252 by the elastic forces of the elastic members 281 and 282 and may be brought into close contact with the first surfaces of the first washer ring 251 and the second washer ring 252. Second surfaces (e.g., surfaces facing in the y-axis direction) of the first washer ring 251 and the second washer ring 252 that face the first shaft bracket 270 may press first surfaces (e.g., surfaces facing in the -y-axis direction) of the first torque brackets 260 disposed between the first washer rings 251 and between the second washer rings 252 by the elastic forces of the elastic members 281 and 282 and may be brought into close contact with the first surfaces of the first torque brackets 260.

Frictional forces by contacts (or, surface pressures) between the second surfaces of the first washer ring 251 and the second washer ring 252 that are disposed between the first torque brackets 260 and the first surfaces of the first torque brackets 260 that face the first stopper 243 and the second stopper 244 may increase the torque of the first hinge structure 200a. Frictional forces by contacts (or, surface pressures) between the first surfaces of the first washer ring 251 and the second washer ring 252 that are disposed between the first torque brackets 260 and the second surfaces of the first torque brackets 260 disposed between the first washer rings 251 and between the second washer rings 252 may increase the torque of the first hinge structure 200a. Frictional forces by contacts (or, surface pressures) between the second surfaces of the first washer ring 251 and the second washer ring 252 that face the first shaft bracket 270 and the first surfaces of the first torque brackets 260 disposed between the first washer rings 251 and between the second washer rings 252 may increase the torque of the first hinge structure 200a. The torque may act as a detent that allows the first hinge structure 200a to be mounted at various angles.

The first shaft bracket 270 may include a fixing structure 273 (e.g., a through-hole in the z-axis direction) that fixes the first hinge structure 200a to the hinge housing 150. In addition, the first shaft bracket 270 may include shaft mounting holes 271 and 272 into which the first shaft 241 and the second shaft 242 disposed in the y-axis direction are inserted. The sizes of the shaft mounting holes 271 and 272 of the first shaft bracket 270 may be larger than those of the first shaft 241 and the second shaft 242. The first shaft 241 may be inserted into and mounted in the first shaft mounting hole 271, and the second shaft 242 may be inserted into and mounted in the second shaft mounting hole 272. The first shaft bracket 270 may include cam structures 274 and 275 engaged with the cam members. The first cam structure 274 and the second cam structure 275 of the first shaft bracket 270 may be disposed on a sidewall of the first shaft bracket 270 that faces in the -y-axis direction.

The cam members 361 and 362 may include the first cam 361 engaged with the first cam structure 274 of the first shaft bracket 270 and the second cam 362 engaged with the second cam structure 275 of the first shaft bracket 270. The first cam 361 may include, in the center thereof, a hole through which the first shaft 241 passes, and the second cam 362 may include, in the center thereof, a hole through which the second shaft 242 passes.

The first elastic member 281 and the second elastic member 282 may be disposed between the cam members 361 and 362 and the center bar brackets 191 and 192 and may provide elastic forces that push the cam members 361 and 362 toward the first shaft bracket 270. For example, at least one of the first elastic member 281 or the second elastic member 282 may be a disc spring capable of implementing a force greater than that of a coil spring.

The plurality of coupling members 371 and 372 may include the first coupling member 371 and the second coupling member 372. The first coupling member 371 may fix one side of the first shaft 241 that protrudes in the -y-axis direction through the first shaft mounting hole 271. The second coupling member 372 may fix one side of the second shaft 242 that protrudes in the -y-axis direction through the second shaft mounting hole 272. The plurality of coupling members 371 and 372 described above may have, for example, the shape of a nut.

The plurality of center bar brackets 191, 192, 193, and 194 may include the first center bar bracket 191 and the second center bar bracket 192 disposed between the plurality of coupling members 371 and 372 and the plurality of elastic members 281 and 282 and the third center bar bracket 193 and the fourth center bar bracket 194 disposed between the first interlocking member 350 and the fixed bracket 230. Each of the first center bar bracket 191 and the third center bar bracket 193 may include, in the center thereof, a through-hole through which the first shaft 241 passes. Each of the second center bar bracket 192 and the fourth center bar bracket 194 may include, in the center thereof, a through-hole through which the second shaft 242 passes.

The first center bar bracket 191 may include a plurality of first protrusion areas 195 that protrude in the -y-axis direction. The plurality of first protrusion areas 195 may be spaced apart from one another at a certain distance. The plurality of first protrusion areas 195 may be used as guide members when the first center bar 171 and the first hinge structure 200a are assembled. The second center bar bracket 192 may include a plurality of second protrusion areas 196 that protrude in the -y-axis direction. The plurality of second protrusion areas 196 may be spaced apart from one another at a certain distance. The plurality of second protrusion areas 196 may be used as guide members when the first center bar 171 and the first hinge structure 200a are assembled. The third center bar bracket 193 may include a plurality of third protrusion areas 197 that protrude in the -y-axis direction. The plurality of third protrusion areas 197 may be spaced apart from one another at a certain distance. The plurality of third protrusion areas 197 may be used as guide members when the first center bar 171 and the first hinge structure 200a are assembled. The fourth center bar bracket 194 may include a plurality of fourth protrusion areas 198 that protrude in the -y-axis direction. The plurality of fourth protrusion areas 198 may be spaced apart from one another at a certain distance. The plurality of fourth protrusion areas 198 may be used as guide members when the first center bar 171 and the first hinge structure 200a are assembled.

The first center bar 171 may include a plurality of guide structures 177 and 178 protruding in the -z-axis direction from a first center bar body 174 toward the first hinge structure 200a. The plurality of guide structures 177 and 178 may include the first guide structure 177 protruding between the first center bar bracket 191 and the second center bar bracket 192 and the second guide structure 178 protruding between the third center bar bracket 193 and the fourth center bar bracket 194. The first guide structure 177 may include a first slot 175a penetrating the first guide structure 177 in the x-axis direction and a second slot 175b penetrating the first guide structure 177 in the -x-axis direction. At least one of the plurality of first protrusion areas 195 of the first center bar bracket 191 may be inserted into the first slot 175a. At least one of the plurality of second protrusion areas 196 of the second center bar bracket 192 may be inserted into the second slot 175b. The second guide structure 178 may include a third slot 176a penetrating the second guide structure 178 in the x-axis direction and a fourth slot 176b penetrating the second guide structure 178 in the -x-axis direction. At least one of the plurality of third protrusion areas 197 of the third center bar bracket 193 may be inserted into the third slot 176a. At least one of the plurality of fourth protrusion areas 198 of the fourth center bar bracket 194 may be inserted into the fourth slot 176b.

The first center bar 171 may be fastened to the first hinge structure 200a. In each of the unfolded state (open), the folded state (closed), and an intermediate state of the electronic device, the position of the first center bar 171 may not be changed at the remaining positions other than the z-axis and -z-axis positions and may be the same at a fixed position. In each of the unfolded state (open), the folded state (closed), and the intermediate state of the electronic device, the first center bar 171 may be in the center of the electronic device.

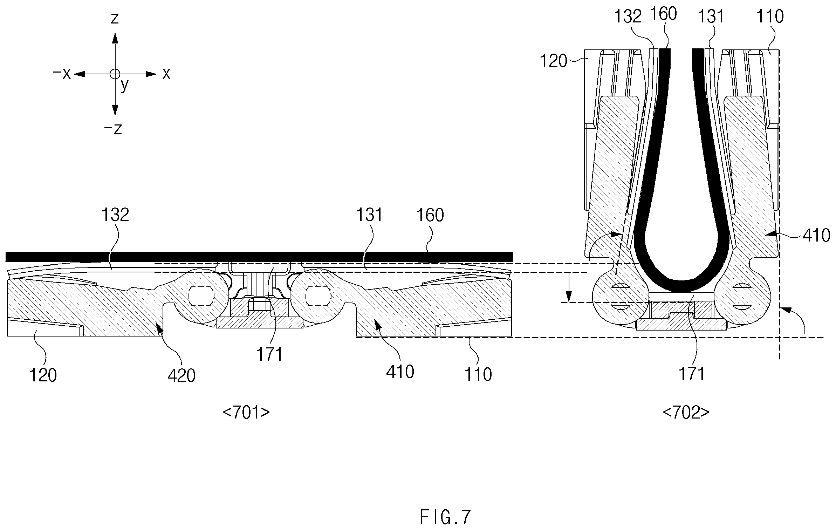

FIG. 7 is a view illustrating an unfolded state and a folded state of the hinge structure 200a included in the electronic device according to an embodiment. In FIG. 7, drawing 701 illustrates an example of a section at the position where the arm members 410 and 420 are disposed in the unfolded state of the hinge structure 200a, and drawing 702 illustrates an example of a section at the position where the arm members 410 and 420 are disposed in the folded state of the hinge structure 200a.

Referring to FIG. 7, in drawing 701, the electronic device 100 may be disposed in the unfolded state (open). When the electronic device 100 is in the unfolded state (open), one surface of the first housing 110 (e.g., the surface on which the first area 161 of the display 160 is seated) and one surface of the second housing 120 (e.g., the surface on which the second area 162 of the display 160 is seated) may be disposed to face in the z-axis direction. When the electronic device 100 is in the unfolded state (open), the third area 163 disposed between the first area 161 and the second area 162 of the display 160 may remain flat.

In drawing 702, the electronic device 100 may be disposed in the folded state (closed). When the electronic device 100 is in the folded state (closed), the one surface of the first housing 110 (e.g., the surface on which the first area 161 of the display 160 is seated) and the one surface of the second housing 120 (e.g., the surface on which the second area 162 of the display 160 is seated) may be disposed to face each other. The convex portion of the third area 163 (or, the folding area) disposed between the first area 161 and the second area 162 of the display 160 may be disposed to face in the -z-axis direction.

When the electronic device 100 is in the folded state (closed), the first wing plate 131 and the second wing plate 132 disposed on the first arm member 410 and the second arm member 420 may support portions of the display 160 in response to rotation of the arm members 410 and 420.

When the electronic device 100 is changed from the unfolded state (open) to the folded state (closed), the first wing plate 131 and the second wing plate 132 may be disposed adjacent to each other with the display 160 therebetween. When the electronic device 100 is changed from the unfolded state (open) to the folded state (closed), the wing plates 131 and 132 may rotate in the clockwise or counterclockwise direction depending on a hinge operation of one or more hinge structures 200a and 200b. For example, while the first wing plate 131 rotates in the counterclockwise direction, the second wing plate 132 may rotate in the clockwise direction, and while the first wing plate 131 rotates in the clockwise direction, the second wing plate 132 may rotate in the counterclockwise direction.

FIG. 8 is a view illustrating an example of the formation of axes of the first hinge structure 200a in the unfolded state of the first hinge structure 200a included in the electronic device according to an embodiment. In FIG. 8, drawing 801 is a view illustrating an example of a section of the hinge structure 200a taken along line A-A' in FIG. 4. For example, drawing 801 illustrates an example of a section at the position where the rotating members 210 and 220 are disposed in the hinge structure 200a. In FIG. 8, drawing 802 is a view illustrating an example of a section of the hinge structure 200a taken along line B-B' in FIG. 4. For example, drawing 802 illustrates an example of a section at the position where the arm members 410 and 420 are disposed in the hinge structure 200a.

Referring to FIGS. 1 to 8, the first rail structure 211 of the first rotating member 210 may be fastened to one side (e.g., the first rail 231) of the fixed bracket 230. The third rail structure 221 of the second rotating member 220 may be fastened to an opposite side (e.g., the second rail 232) of the fixed bracket 230. The first rail 231 and the second rail 232 of the fixed bracket 230 may be disposed such that at least a portion of the first rail 231 and at least a portion of the second rail 232 overlap each other when viewed in the y-axis direction from a point on the x-axis. Accordingly, one edge (e.g., the x-axis edge) of the first rail structure 211 and one edge (e.g., the -x-axis edge) of the third rail structure 212 may be disposed to partially overlap each other.

The first rail structure 211 of the first rotating member 210 may rotate about the first axis 811 (or, the first virtual axis) in the clockwise or counterclockwise direction within the first rail 231 of the fixed bracket 230. The first axis 811 may be fixed irrespective of whether the electronic device 100 is changed to the folded state or the unfolded state (open). Accordingly, the first axis 811 may be a first fixed axis of the fixed bracket 230. The second rail structure 212 of the first rotating member 210 may perform a rotational motion (or, a sliding motion) with respect to the second axis 812 (or, the second virtual axis) within the fourth rail 321 of the second link member 320. In this case, the second rail structure 212 and the fourth rail 321 may be moved in the clockwise or counterclockwise direction in response to rotation of the first link member 310 (e.g., the first link member 310 rotates in the counterclockwise direction while the electronic device 100 is changed from the unfolded state (open) to the folded state and rotates in the clockwise direction while the electronic device 100 is changed from the folded state to the unfolded state (open)). Accordingly, the second axis 812 may be a moving axis that is moved in the clockwise or counterclockwise direction depending on the movement of the second link member 320.

Similarly, the third rail structure 221 of the second rotating member 220 may rotate about the fifth axis 815 (or, the fourth virtual axis) in the clockwise or counterclockwise direction within the second rail 232 of the fixed bracket 230. The fifth axis 815 may be fixed irrespective of whether the electronic device 100 is changed to the folded state or the unfolded state (open). Accordingly, the fifth axis 815 may be a second fixed axis of the fixed bracket 230. The fourth rail structure 222 of the second rotating member 220 may perform a rotational motion (or, a sliding motion) with respect to the sixth axis 816 (or, the fourth virtual axis) within the sixth rail 341 of the fourth link member 340. In this case, the fourth rail structure 222 and the sixth rail 341 may be moved in the clockwise or counterclockwise direction in response to rotation of the fourth link member 340 (e.g., the fourth link member 340 rotates in the clockwise direction while the electronic device 100 is changed from the unfolded state (open) to the folded state and rotates in the counterclockwise direction while the electronic device 100 is changed from the folded state to the unfolded state (open)). Accordingly, the sixth axis 816 may be a moving axis that is moved in the clockwise or counterclockwise direction depending on the movement of the fourth link member 340.

The first shaft 241 fixed to one side of the fixed bracket 230 (e.g., the - x-axis edge of the sidewall facing in the -y-axis direction) may be fastened with the first arm member 410. A portion of the first shaft 241 may be disposed on one side of the first arm member 410 (e.g., in a through-hole of the first shaft mounting part 412). The first shaft 241 may serve as a third axis 813 (or, a first real axis) about which the first arm member 410 rotates. The fifth rail structure 411 of the first arm member 410 may perform a sliding motion with respect to a fourth axis 814 (or, a third virtual axis) within the fifth rail 331 of the first link member 310. In this case, the fifth rail structure 411 and the third rail 311 may be moved in the clockwise or counterclockwise direction in response to rotation of the third link member 330 (e.g., the third link member 330 rotates in the counterclockwise direction while the electronic device 100 is changed from the unfolded state (open) to the folded state and rotates in the clockwise direction while the electronic device 100 is changed from the folded state to the unfolded state (open)). Accordingly, the fourth axis 814 may be a moving axis that is moved in the clockwise or counterclockwise direction depending on the movement of the first link member 310.

Similarly, the second shaft 242 fixed to an opposite side of the fixed bracket 230 (e.g., the x-axis edge of the sidewall facing in the -y-axis direction) may be fastened with the second arm member 420. A portion of the second shaft 242 may be disposed on an opposite side of the second arm member 420 (e.g., in a through-hole of the second shaft mounting part 422). The second shaft 242 may serve as a seventh axis 817 (or, a second real axis) about which the second arm member 420 rotates. The sixth rail structure 421 of the second arm member 420 may perform a sliding motion with respect to an eighth axis 818 (or, a sixth virtual axis) within the fifth rail 331 of the third link member 330. In this case, the sixth rail structure 421 and the fifth rail 331 may be moved in the clockwise or counterclockwise direction in response to rotation of the third link member 330 (e.g., the third link member 330 rotates in the counterclockwise direction while the electronic device 100 is changed from the unfolded state (open) to the folded state and rotates in the clockwise direction while the electronic device 100 is changed from the folded state to the unfolded state (open)). Accordingly, the eighth axis 818 may be a moving axis that is moved in the clockwise or counterclockwise direction depending on the movement of the third link member 330.

According to an embodiment, the first axis 811 and the fifth axis 815 may be located on a first xy-plane parallel to the display 160, and the second axis 812 and the sixth axis 816 may be located on a second xy-plane parallel to the display 160 and different from the first xy-plane. Accordingly, when viewed with respect to the z-axis, the first axis 811 and the fifth axis 815 may be formed at positions different from the positions of the second axis 812 and the sixth axis 816, and the third axis 813 and the seventh axis 817 may be formed at positions different from the positions of the first axis 811 and the fifth axis 815 and the positions of the second axis 812 and the sixth axis 816.

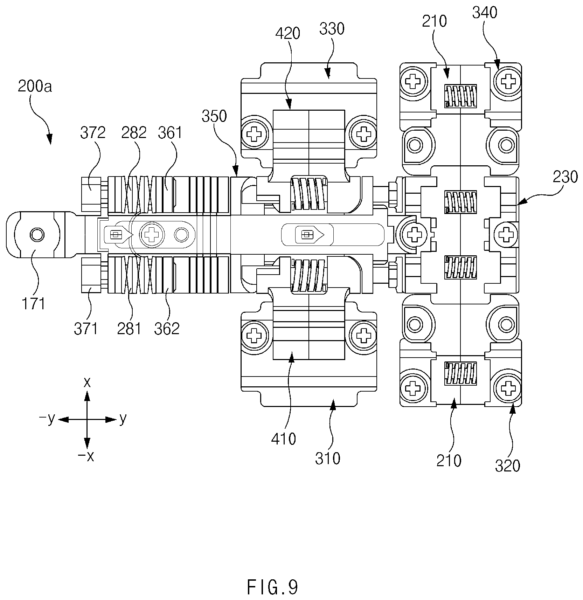

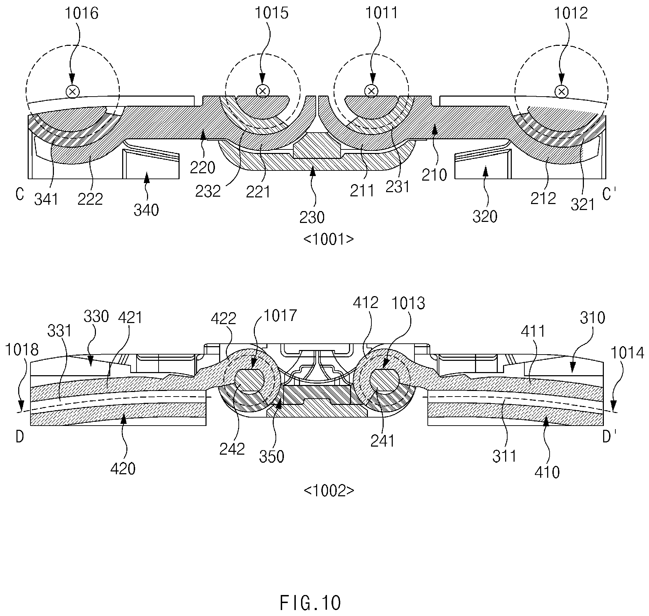

FIG. 9 is a view illustrating an example of the first hinge structure 200a included in the electronic device according to an embodiment. FIG. 10 is a view illustrating an example of the formation of axes of the first hinge structure 200a in the unfolded state of the first hinge structure 200a included in the electronic device according to an embodiment. In FIG. 10, drawing 1001 illustrates an example of a section at the position where the rotating members 210 and 220 are disposed in the hinge structure 200a. Drawing 1002 illustrates an example of a section at the position where the arm members 410 and 420 are disposed in the hinge structure 200a.

The components of the hinge structure illustrated in FIGS. 9 and 10 may correspond to the components of the hinge structure described above with reference to FIGS. 1 to 8, except for the structures related to the arm members 410 and 420 and the link members 310 and 330. Accordingly, detailed description of the remaining components other than the arm members 410 and 420, the first link member 310, and third link member 330 will be replaced with the contents described above with reference to FIGS. 1 to 8. For example, the structures and configurations of the rotating members 210 and 220, the fixed bracket 230, the second link member 320, and the fourth link member 340 will be replaced with the contents described with reference to FIGS. 1 to 8.

The first arm member 410 and the second arm member 420 of the hinge structure illustrated in FIGS. 9 and 10 may perform a rotational motion with respect to a fourth axis 1014 or an eighth axis 1018. The first link member 310 may be formed to surround the first arm member 410 in the shape of "C", and the third link member 330 may be formed to surround the second arm member 420 in the shape of "C".

Referring to FIGS. 9 and 10, the first rail structure 211 of the first rotating member 210 may rotate about a first axis 1011 (or, a first virtual axis) (e.g., the first axis 811 of FIG. 8) in the clockwise or counterclockwise direction within the first rail 231 of the fixed bracket 230. The second rail structure 212 of the first rotating member 210 may perform a rotational motion (or, a sliding motion) with respect to a second axis 1012 (or, a second virtual axis) (e.g., the second axis 812 of FIG. 8) within the fourth rail 321 of the second link member 320.

Similarly, the third rail structure 221 of the second rotating member 220 may rotate about a fifth axis 1015 (or, a fourth virtual axis) (e.g., the fifth axis 815 of FIG. 8) in the clockwise or counterclockwise direction within the second rail 232 of the fixed bracket 230. The fourth rail structure 222 of the second rotating member 220 may perform a rotational motion (or, a sliding motion) with respect to a sixth axis 1016 (or, a fourth virtual axis) (e.g., the sixth axis 816 of FIG. 8) within the sixth rail 341 of the fourth link member 340.

The first shaft 241 may serve as a third axis 1013 (or, a first real axis) (e.g., the third axis 813 of FIG. 8) about which the first arm member 410 rotates. The fifth rail structure 411 of the first arm member 410 may perform a rotational motion with respect to the fourth axis 1014 (or, the third virtual axis) within the fifth rail 331 of the first link member 310. In this case, the fifth rail structure 411 and the third rail 311 may be moved in the clockwise or counterclockwise direction in response to rotation of the third link member 330 (e.g., the third link member 330 rotates in the counterclockwise direction while the electronic device 100 is changed from the unfolded state (open) to the folded state and rotates in the clockwise direction while the electronic device 100 is changed from the folded state to the unfolded state (open)). Accordingly, the fourth axis 1014 may be a moving axis that is moved in the clockwise or counterclockwise direction depending on the movement of the first link member 310.

Similarly, the second shaft 242 may serve as a seventh axis 1017 (or, a second real axis) (e.g., the seventh axis 817 of FIG. 8) about which the second arm member 420 rotates. The sixth rail structure 421 of the second arm member 420 may perform a rotational motion with respect to the eighth axis 1018 (or, the sixth virtual axis) within the fifth rail 331 of the third link member 330. In this case, the sixth rail structure 421 and the fifth rail 331 may be moved in the clockwise or counterclockwise direction in response to rotation of the third link member 330 (e.g., the third link member 330 rotates in the counterclockwise direction while the electronic device 100 is changed from the unfolded state (open) to the folded state and rotates in the clockwise direction while the electronic device 100 is changed from the folded state to the unfolded state (open)). Accordingly, the eighth axis 1018 may be a moving axis that is moved in the clockwise or counterclockwise direction depending on the movement of the third link member 330.

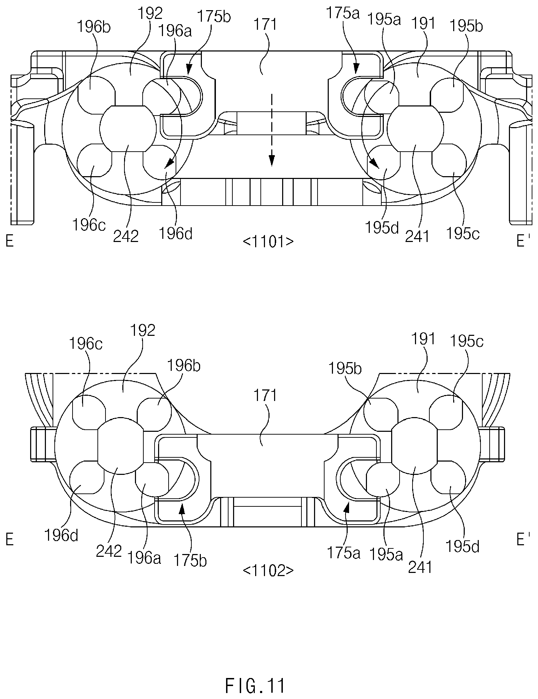

FIG. 11 is a view illustrating the unfolded state and the folded state of the hinge structure 200a included in the electronic device according to an embodiment. In FIG. 11, drawing 1101 illustrates an example of a section of the unfolded hinge structure 200a taken along line E-E' in FIG. 4. In FIG. 11, drawing 1102 illustrates an example of a section of the folded hinge structure 200a taken along line E-E' in FIG. 4. For example, drawings 1101 and 1102 illustrate an example of a section at the position where the slots 175a and 176a of the first center bar 171 and the protrusion areas 195 and 196 of the center bar brackets 191 and 192 are disposed in the hinge structure 200a.

Referring to FIGS. 1 to 11, the hinge structure 200a of the electronic device 100 may include the plurality of shafts 241 and 242, the first center bar 171, the first center bar bracket 191, and the second center bar bracket 192. The first center bar bracket 191 may include a plurality of first protrusion areas 195a, 195b, 195c, and 195d arranged around the first shaft 241. The second center bar bracket 192 may include a plurality of second protrusion areas 196a, 196b, 196c, and 196d arranged around the second shaft 242.

In drawing 1101, the electronic device 100 may be disposed in the unfolded state (open). When the electronic device 100 is in the unfolded state (open), one first protrusion area 195a among the plurality of first protrusion areas 195a, 195b, 195c, and 195d of the first center bar bracket 191 may be coupled to the first slot 175a, and one second protrusion area 196a among the plurality of second protrusion areas 196a, 196b, 196c, and 196d of the second center bar bracket 192 may be engaged with the second slot 175b.

When the electronic device 100 is changed from the unfolded state (open) to the folded state (closed), the first shaft 241 and the second shaft 242 may rotate in opposite directions. For example, while the first shaft 241 rotates in the counterclockwise direction, the second shaft 242 may rotate in the clockwise direction, and while the first shaft 241 rotates in the clockwise direction, the second shaft 242 may rotate in the counterclockwise direction. The first center bar bracket 191 fastened to the first shaft 241 and the second center bar bracket 192 fastened to the second shaft 242 may rotate in opposite directions. One first protrusion area 195a among the plurality of first protrusion areas 195a, 195b, 195c, and 195d of the first center bar bracket 191 may be engaged with the first slot 175a and may operate in conjunction with the first slot 175a. One second protrusion area 196a among the plurality of second protrusion areas 196a, 196b, 196c, and 196d of the second center bar bracket 192 may be engaged with the second slot 175b and may operate in conjunction with the second slot 175b. The first center bar 171 may perform a linear motion in the z-axis or -z-axis direction in response to rotation of the first center bar bracket 191 and the second center bar bracket 192 such that the center bar is actuated towards the display.

According to an embodiment, when the electronic device 100 is changed from the unfolded state (open) to the folded state (closed), the first center bar 171 may perform a linear motion in the -z-axis direction in conjunction with rotation of the first center bar bracket 191 in the counterclockwise direction and rotation of the third center bar bracket 193 in the clockwise direction. When the electronic device 100 is changed from the folded state to the unfolded state (open), the first center bar 171 may perform a linear motion in the z-axis direction in conjunction with rotation of the first center bar bracket 191 in the clockwise direction and rotation of the third center bar bracket 193 in the counterclockwise direction.

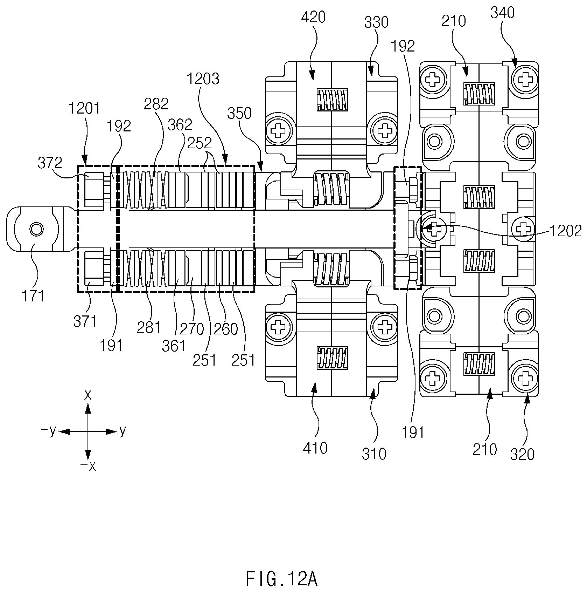

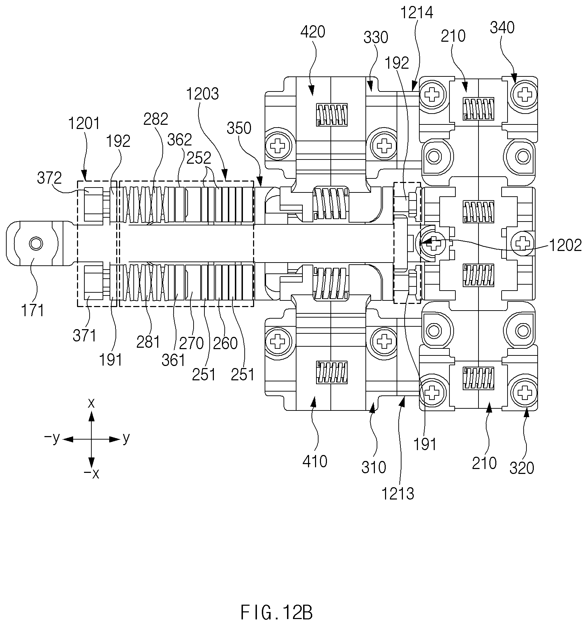

FIGS. 12A and 12B are views illustrating examples of the hinge structure according to an embodiment.

Referring to FIGS. 1 to 12B, at least one of the first hinge structure 200a or the second hinge structure 200b according to an embodiment may include a detent structure 1203, a first center bar driving structure 1201, and a second center bar driving structure 1202. The detent structure 1203 may include at least one of the first shaft bracket 270, the cam members 361 and 362, the plurality of elastic members 281 and 282, the plurality of ring structures 251 and 252, or the plurality of torque brackets 260.

At least one of the first center bar driving structure 1201 or the second center bar driving structure 1202 may include at least one of the plurality of center bar brackets 191 and 192 and/or the coupling members 371 and 372. For example, the first center bar driving structure 1201 and the second center bar driving structure 1202 may include the plurality of center bar brackets 191 and 192 coupled with the center bar 171.

According to an embodiment, as illustrated in FIG. 12A, the first link member 310 and the second link member 320 may be spaced apart from each other, and the third link member 330 and the fourth link member 340 may be spaced apart from each other.

According to an embodiment, as illustrated in FIG. 12B, the first link member 310 and the second link member 320 may be integrally connected with each other through a first link bridge 1213, and the third link member 330 and the fourth link member 340 may be integrally connected with each other through a second link bridge 1214.

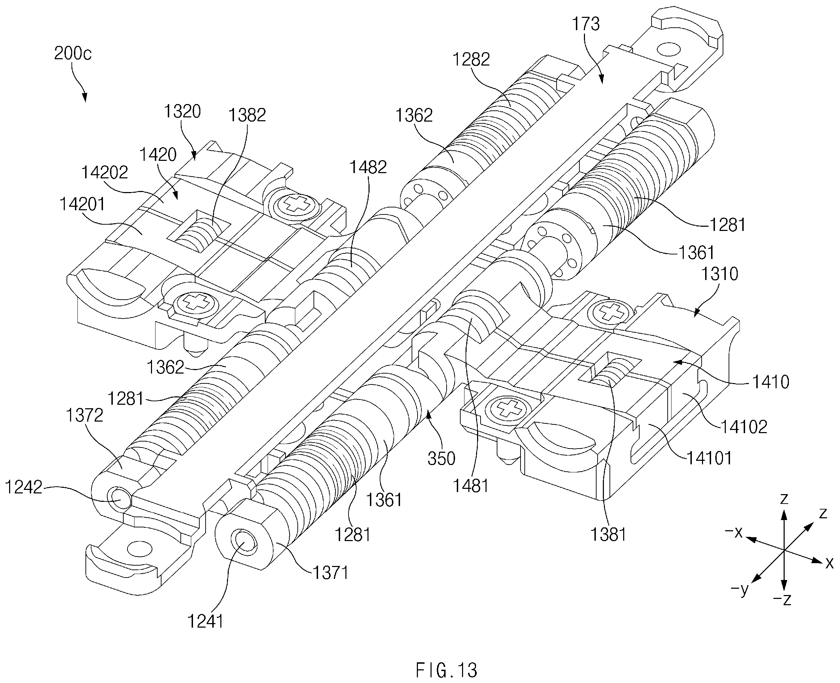

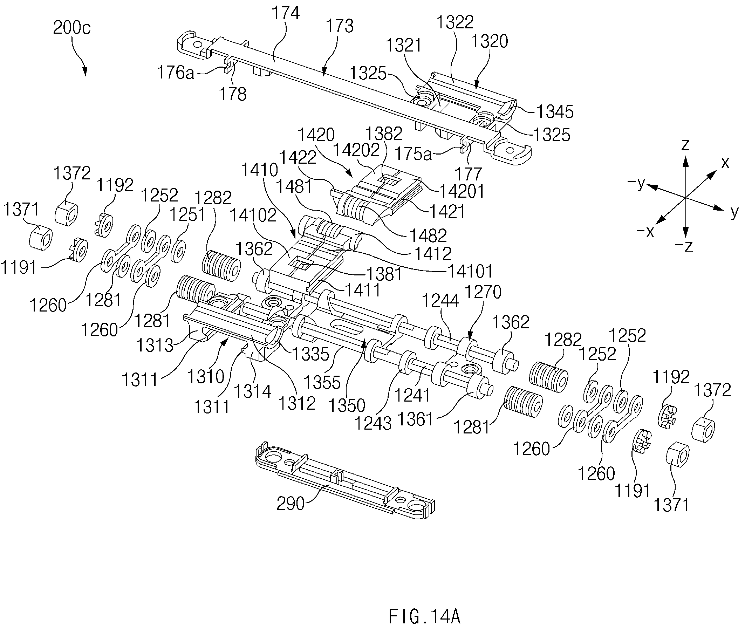

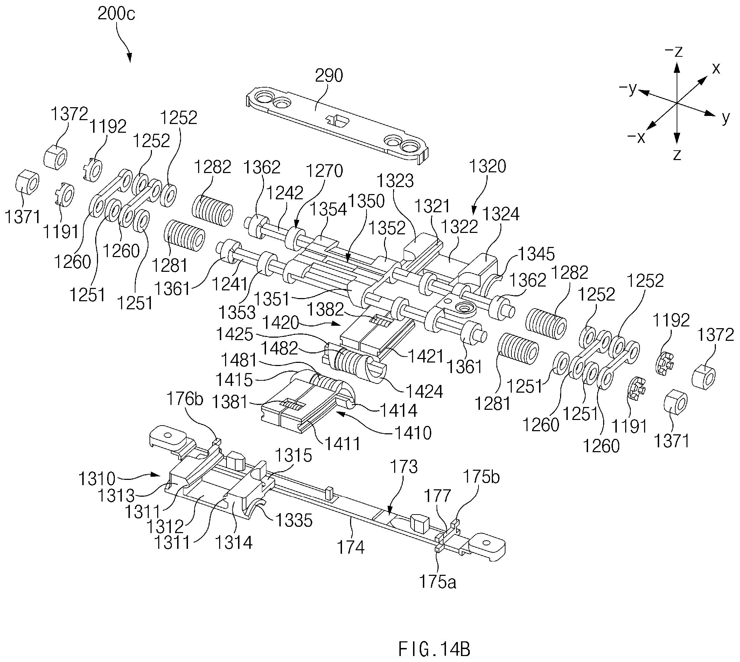

FIG. 13 is a view illustrating an example of a hinge structure according to an embodiment. FIG. 14A is a front exploded perspective view of the hinge structure according to an embodiment. FIG. 14B is a rear exploded perspective view of the hinge structure according to an embodiment. Among the hinge structures 200a, 200b, and 200c described above with reference to FIGS. 1 and 2, the third hinge structure 200c will be described below with reference to FIGS. 13 to 14B.

Referring to FIGS. 1 to 14B, the third hinge structure 200c may include a fifth link member 1310 (or, a fifth slide link, a fifth rotation support structure, or a third arm link member), a sixth link member 1320 (or, a sixth slide link, a sixth rotation support structure, or a fourth arm link member), a third arm member 1410 (or, a third arm structure or a third arm), a fourth arm member 1420 (or, a fourth arm structure or a fourth arm), a second interlocking member 1350, and the third center bar 173.

The fifth link member 1310 may fix the third arm member 1410 to the first housing 110 and may support a rotation operation (or, a sliding operation) of the third arm member 1410. The fifth link member 1310 includes a structure on which a portion of the third arm member 1410 is seated. The fifth link member 1310 may include a fifth link body 1312, and a 51^{st} link sidewall 1313 and a 52^{nd} link sidewall 1314 that extend in the -z-axis direction from opposite sides (e.g., y-axis and -y-axis edges) of the fifth link body 1312. An empty space may be formed between the 51^{st} link sidewall 1313 and the 52^{nd} link sidewall 1314, and a seventh rail 1311 (or, a third arm rail or a fifth link rail) protruding toward the empty space between the 51^{st} link sidewall 1313 and the 52^{nd} link sidewall 1314 may be formed on each of the 51^{st} link sidewall 1313 and the 52^{nd} link sidewall 1314. The seventh rail 1311 may be fastened to a seventh rail structure 1411 (or, a third arm rail structure) of the third arm member 1410. The seventh rail structure 1411 of the third arm member 1410 may be seated in the empty space, and a rotation or sliding operation of the seventh rail structure 1411 may be guided. A ninth rail 1335 facing away from the seventh rail 1311 may be formed on each of the 51^{st} link sidewall 1313 and the 52^{nd} link sidewall 1314.

The fifth link member 1310 may include at least one fifth link connecting part 1315 where a structure (e.g., at least one hole or groove) used to fix the fifth link member 1310 to the first housing 110 is formed. The fifth link connecting part 1315 may protrude from one side of the fifth link body 1312 (e.g., the 51^{st} link sidewall 1313) in the y-axis direction and/or may protrude from an opposite side of the fifth link body 1312 (e.g., the 52^{nd} link sidewall 1314) in the -y-axis direction.

The sixth link member 1320 may fix the fourth arm member 1420 to the second housing 120 and may support a rotation operation (or, a sliding operation) of the fourth arm member 1420. The sixth link member 1320 includes a structure on which a portion of the fourth arm member 1420 is seated. The sixth link member 1320 may include a sixth link body 1322, and a 61^{st} link sidewall 1323 and a 62^{nd} link sidewall 1324 that extend in the z-axis direction from opposite sides (e.g., y-axis and -y-axis edges) of the sixth link body 1322. An empty space may be formed between the 61^{st} link sidewall 1323 and the 62^{nd} link sidewall 1324, and an eighth rail 1321 (or, a sixth link rail or a fourth arm rail) protruding toward the empty space between the 61^{st} link sidewall 1323 and the 62^{nd} link sidewall 1324 may be formed on each of the 61^{st} link sidewall 1323 and the 62^{nd} link sidewall 1324. The eighth rail 1321 may be fastened to an eighth rail structure 1421 (or, a fourth arm rail structure) of the fourth arm member 1420. The eighth rail structure 1421 of the fourth arm member 1420 may be seated in the empty space, and a rotation or sliding operation of the eighth rail structure 1421 may be guided. A tenth rail 1345 facing away from the eighth rail 1321 may be formed on each of the 61^{st} link sidewall 1323 and the 62^{nd} link sidewall 1324.

The sixth link member 1320 may include at least one sixth link connecting part 1325 where a structure (e.g., at least one hole or groove) used to fix the sixth link member 1320 to the second housing 120 is formed. The sixth link connecting part 1325 may protrude from one side of the sixth link body 1322 (e.g., the 61^{st} link sidewall 1323) in the y-axis direction and/or may protrude from an opposite side of the sixth link body 1322 (e.g., the 62^{nd} link sidewall 1324) in the -y-axis direction.

The third arm member 1410 includes a structure (e.g., the seventh rail structure 1411 or the third arm rail structure) fastened with the fifth link member 1310 coupled with the first housing 110. The seventh rail structure 1411 may perform a sliding operation in the clockwise and counterclockwise directions within the seventh rail 1311 formed in the fifth link member 1310.

The third arm member 1410 may include a fifth sub-arm member 14101 and a sixth sub-arm member 14102 facing the fifth sub-arm member 14101 in the y-axis direction. At least a portion of the fifth sub-arm member 14101 may be formed to be symmetrical to at least a portion of the sixth sub-arm member 14102. At least one of the fifth sub-arm member 14101 or the sixth sub-arm member 14102 may include a third arm body 1413 and a third shaft mounting part 1412 that extends from the third arm body 1413 in the -x-axis direction and that is fastened to a third shaft 1241. A hole may be formed through the third shaft mounting part 1412 in the y-axis or -y-axis direction such that the third shaft 1241 is mounted therein.

The fifth sub-arm member 14101 and the sixth sub-arm member 14102 may be coupled with a third arm elastic member 1381 and a third interlocking elastic member 1481 therebetween. The third arm elastic member 1381 may be coupled between the seventh rail structure 1411 of the fifth sub-arm member 14101 and the eighth rail structure 1421 of the sixth sub-arm member 14102. The third interlocking elastic member 1481 may be coupled between the third shaft mounting part 1412 of the fifth sub-arm member 14101 and the third shaft mounting part 1412 of the sixth sub-arm member 14102. The third arm elastic member 1381 and the third interlocking elastic member 1481 may be elastically deformed in the process in which the fifth sub-arm member 14101 and the sixth sub-arm member 14102 are coupled.

The third shaft mounting part 1412 may include spiral structures 1414 and 1415 engaged with the second interlocking member 1350. The third shaft mounting part 1412 of the fifth sub-arm member 14101 may include the 25^{th} spiral structure 1414 engaged with a fifteenth spiral structure 1351 of the second interlocking member 1350. The 25^{th} spiral structure 1414 may be disposed on a sidewall of the third shaft mounting part 1412 of the fifth sub-arm member 14101 that faces in the -y-axis direction. The third shaft mounting part 1412 of the sixth sub-arm member 14102 may include the 26^{th} spiral structure 1415 engaged with a sixteenth spiral structure 1352 of the second interlocking member 1350. The 26^{th} spiral structure 1415 may be disposed on a sidewall of the third shaft mounting part 1412 of the sixth sub-arm member 14102 that faces in the y-axis direction.

The 25^{th} spiral structure 1414 and the 26^{th} spiral structure 1415 formed on the third arm member 1410 may be fastened to the fifteenth spiral structure 1351 and the sixteenth spiral structure 1352 of the second interlocking member 1350. The 25^{th} spiral structure 1414 and the 26^{th} spiral structure 1415 may rotate depending on rotation of the third arm member 1410, and the second interlocking member 1350 having the fifteenth spiral structure 1351 and the sixteenth spiral structure 1415 formed thereon may perform a linear motion in the y-axis direction (or, in a direction parallel to the direction in which the display 160 is folded) in response to the rotation of 25^{th} spiral structure 1414 and the 26^{th} spiral structure 1415. The third arm member 1410 may rotate about a real axis of a fourth shaft 1242 in the clockwise and counterclockwise directions.

The third arm member 1410 including the fifth sub-arm member 14101 and the sixth sub-arm member 14102 may rotate about the real axis of the third shaft 1241 in the clockwise and counterclockwise directions.

The fourth arm member 1420 includes a structure (e.g., the eighth rail structure 1421) fastened with the sixth link member 1320 coupled with the second housing 120. The eighth rail structure 1421 may perform a sliding operation in the clockwise and counterclockwise directions within the eighth rail 1321 formed in the sixth link member 1320.

The fourth arm member 1420 may include a seventh sub-arm member 14201 and an eighth sub-arm member 14202 facing the seventh sub-arm member 14201 in the y-axis direction. At least a portion of the seventh sub-arm member 14201 may be formed to be symmetrical to at least a portion of the eighth sub-arm member 14202 with respect to the x-axis. At least one of the seventh sub-arm member 14201 or the eighth sub-arm member 14202 may include a fourth arm body 1423 and a fourth shaft mounting part 1422 that extends from the fourth arm body 1423 in the x-axis direction and that is fastened to the fourth shaft 1242. A hole may be formed through the fourth shaft mounting part 1422 in the y-axis or -y-axis direction such that the fourth shaft 1242 is mounted therein.

The seventh sub-arm member 14201 and the eighth sub-arm member 14202 may be coupled with a fourth arm elastic member 1382 and a fourth interlocking elastic member 1482 therebetween. The fourth arm elastic member 1382 may be coupled between the eighth rail structures 1421 that are formed on the seventh sub-arm member 14201 and the eighth sub-arm member 14202, respectively. The fourth interlocking elastic member 1482 may be coupled between the fourth shaft mounting parts 1422 that are formed on the seventh sub-arm member 14201 and the eighth sub-arm member 14202, respectively. The fourth arm elastic member 1382 and the fourth interlocking elastic member 1482 may be elastically deformed in the process in which the seventh sub-arm member 14201 and the eighth sub-arm member 14202 are coupled.

The fourth shaft mounting part 1422 may include spiral structures 1424 and 1425 engaged with the second interlocking member 1350. The fourth shaft mounting part 1422 of the seventh sub-arm member 14201 may include the 27^{th} spiral structure 1424 engaged with a seventeenth spiral structure 1353 of the second interlocking member 1350. The 27^{th} spiral structure 1424 may be disposed on a sidewall of the fourth shaft mounting part 1422 of the seventh sub-arm member 14201 that faces in the -y-axis direction. The fourth shaft mounting part 1422 of the eighth sub-arm member 14202 may include the 28^{th} spiral structure 1425 engaged with an eighteenth spiral structure 1354 of the second interlocking member 1350. The 28^{th} spiral structure 1425 may be disposed on a sidewall of the fourth shaft mounting part 1422 of the eighth sub-arm member 14202 that faces in the y-axis direction.

The 27^{th} spiral structure 1424 and the 28^{th} spiral structure 1425 formed on the fourth arm member 410 may be fastened to the seventeenth spiral structure 1353 and the eighteenth spiral structure 1354 of the second interlocking member 1350. The 27^{th} spiral structure 1424 and the 28^{th} spiral structure 1425 may rotate depending on rotation of the fourth arm member 1420, and the second interlocking member 1350 having the seventeenth spiral structure 1353 and the eighteenth spiral structure 1354 formed thereon may perform a linear motion in the y-axis direction (or, in a direction parallel to the direction in which the display 160 is folded) in response to the rotation of 27^{th} spiral structure 1424 and the 28^{th} spiral structure 1425. The fourth arm member 1420 may rotate about the real axis of the fourth shaft 1242 in the clockwise and counterclockwise directions.

The second interlocking member 1350 may include a second interlocking body 1355 and the plurality of spiral structures 1351, 1352, 1353, and 1354 extending from the second interlocking body 1355. At least a portion of the third arm member 1410 and at least a portion of the fourth arm member 1420 may be seated on and fixed to the second interlocking body 1355. For example, the third shaft mounting part 1412 of the third arm member 1410 and the fourth shaft mounting part 1422 of the fourth arm member 1420 may be seated on and fixed to the second interlocking body 1355. The plurality of spiral structures 1351, 1352, 1353, and 1354 may include the fifteenth spiral structure 1351 and the sixteenth spiral structure 1352 that extend from the second interlocking body 1355 in the x-axis direction and the seventeenth spiral structure 1353 and the eighteenth spiral structure 1354 that extend from the second interlocking body 1355 in the -x-axis direction. Each of the fifteenth spiral structure 1351 and the sixteenth spiral structure 1352 may include, in the center thereof, a hole through which the third shaft 1241 passes, and each of the seventeenth spiral structure 1353 and the eighteenth spiral structure 1354 may include, in the center thereof, a hole through which the fourth shaft 1242 passes.

The third shaft 1241 may be disposed in line with the first shaft 241. The fourth shaft 1242 may be disposed in line with the second shaft 242.

The third shaft 1241 and the fourth shaft 1242 may pass through a second shaft bracket 270, cam members 1361 and 1362, a plurality of elastic members 1281 and 1282, a plurality of ring structures 1251 and 1252, a plurality of second torque brackets 1260, a plurality of center bar brackets 1191 and 1192, and/or coupling members 1371 and 1372 in the y-axis direction and/or the -y-axis direction. The second shaft bracket 270, the cam members 1361 and 1362, the plurality of elastic members 1281 and 1282, the plurality of ring structures 1251 and 1252, the plurality of second torque brackets 1260, the plurality of center bar brackets 1191 and 1192, and/or the coupling members 1371 and 1372 may be symmetrically disposed with respect to the second interlocking member 1350 (or, the x-axis).

According to an embodiment, the third shaft 1241 may sequentially pass through the second shaft bracket 1270, the third cam 1361, the third elastic member 1281, the third washer ring 1251, the second torque bracket 1260, the third washer ring 1251, the second torque bracket 1260, the fifth center bar bracket 1191, and the third coupling member 1371 that are disposed in the y-axis direction with respect to a third stopper 1243. The third shaft 1241 may sequentially pass through the second shaft bracket 1270, the third cam 1361, the third elastic member 1281, the third washer ring 1251, the second torque bracket 1260, the third washer ring 1251, the second torque bracket 1260, the fifth center bar bracket 1191, and the third coupling member 1371 that are disposed in the -y-axis direction with respect to the second interlocking member 1350.

According to an embodiment, the fourth shaft 1242 may sequentially pass through the second shaft bracket 1282, the fourth cam 1362, the fourth elastic member 1282, the fourth washer ring 1252, the second torque bracket 1260, the fourth washer ring 1252, the second torque bracket 1260, the sixth center bar bracket 1192, and the fourth coupling member 1372 that are disposed in the y-axis direction with respect to a fourth stopper 1244. The fourth shaft 1242 may sequentially pass through the second shaft bracket 1270, the fourth cam 1362, the fourth elastic member 1282, the fourth washer ring 1252, the second torque bracket 1260, the fourth washer ring 1252, the second torque bracket 1260, the sixth center bar bracket 1192, and the fourth coupling member 1372 that are disposed in the -y-axis direction with respect to the second interlocking member 1350.

According to an embodiment, the configurations and structures of the second shaft bracket 1270, the third cam 1361, the fourth cam 1362, the third elastic member 1281, the fourth elastic member 1282, the third washer ring 1251, the fourth washer ring 1252, the second torque bracket 1260, the fifth center bar bracket 1191, the sixth center bar bracket 1192, the third coupling member 1371, and the fourth coupling member 1372 may correspond to the configurations and structures of the first shaft bracket 270, the first cam 361, the second cam 362, the first elastic member 281, the second elastic member 282, the first washer ring 251, the second washer ring 252, the first torque bracket 260, the first center bar bracket 191, the second center bar bracket 192, the first coupling member 371, and the second coupling member 372 described with reference to FIGS. 4 to 12. Accordingly, detailed description of the configurations and structures of the second shaft bracket 1270, the third cam 1361, the fourth cam 1362, the third elastic member 1281, the fourth elastic member 1282, the third washer ring 1251, the fourth washer ring 1252, the second torque bracket 1260, the fifth center bar bracket 1191, the sixth center bar bracket 1192, the third coupling member 1371, and the fourth coupling member 1372 will be replaced with the contents described with reference to FIGS. 4 to 12.

The third center bar 173 may include a plurality of guide structures 177 and 178 protruding in the -z-axis direction from a third center bar body 174 to the third hinge structure 200c. The plurality of guide structures 177 and 178 may include the first guide structure 177 protruding between the first center bar bracket 191 and the third center bar bracket 193 and the second guide structure 178 protruding between the second center bar bracket 192 and the fourth center bar bracket 194. The first guide structure 177 may include a first slot 175a penetrating the first guide structure 177 in the x-axis direction and a second slot 175b penetrating the first guide structure 177 in the -x-axis direction. The second guide structure 178 may include a third slot 176a penetrating the second guide structure 178 in the x-axis direction and a fourth slot 176b penetrating the second guide structure 178 in the -x-axis direction.

According to an embodiment, the configuration and structure of the third center bar 173 may correspond to the configuration and structure of the first center bar 171 described with reference to FIGS. 4 to 12. Accordingly, detailed description of the configuration and structure of the third center bar 173 will be replaced with the contents of the first center bar 171 described with reference to FIGS. 4 to 12.

The third center bar 173 may be fastened to the third hinge structure 200c. In each of the unfolded state (open), the folded state (closed), and the intermediate state of the electronic device, the position of the third center bar 173 may not be changed at the remaining positions (e.g., on the xy-plane) other than the z-axis and -z-axis positions and may be the same at a fixed position. In each of the unfolded state (open), the folded state (closed), and the intermediate state of the electronic device, the third center bar 173 may be in the center of the electronic device.

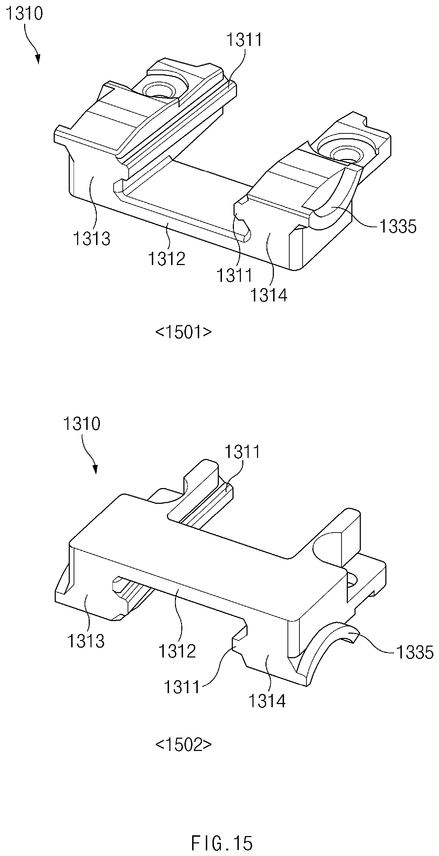

FIG. 15 is a view illustrating an example of the fifth link member 1310 of the hinge structure 200c according to an embodiment. In FIG. 15, drawing 1501 illustrates an example of a rear view of the fifth link member 1310, and drawing 1502 illustrates an example of a front view of the fifth link member 1310. For example, the fifth link member 1310 may have the same structure and configuration as the sixth link member (e.g., the sixth link member 1320 in each of FIGS. 13, 14A, and 14B).

Referring to FIGS. 1 to 15, the fifth link member 1310 may include the fifth link body 1312, and the 51^{st} link sidewall 1313 and the 52^{nd} link sidewall 1314 that extend in the -z-axis direction from the opposite sides (e.g., the y-axis and -y-axis edges) of the fifth link body 1312. An empty space may be formed between the 51^{st} link sidewall 1313 and the 52^{nd} link sidewall 1314. The seventh rail 1311 protruding toward the empty space between the 51^{st} link sidewall 1313 and the 52^{nd} link sidewall 1314 may be formed on each of the 51^{st} link sidewall 1313 and the 52^{nd} link sidewall 1314. The ninth rail 1335 facing away from the seventh rail 1311 may be formed on each of the 51^{st} link sidewall 1313 and the 52^{nd} link sidewall 1314. For example, the seventh rail 1311 may be formed on one surface of the 51^{st} link sidewall 1313 and an opposite surface of the 52^{nd} link sidewall 1314 that faces the one surface of the 51^{st} link sidewall 1313, and the ninth rail 1335 may be formed on an opposite surface of the 51^{st} link sidewall 1313 and one surface of the 52^{nd} link sidewall 1314. The ninth rail 1335 of the fifth link member 1310 may include rails having an arc shape or a half-moon shape. The ninth rail 1335 may form a virtual axis (e.g., a ninth axis).

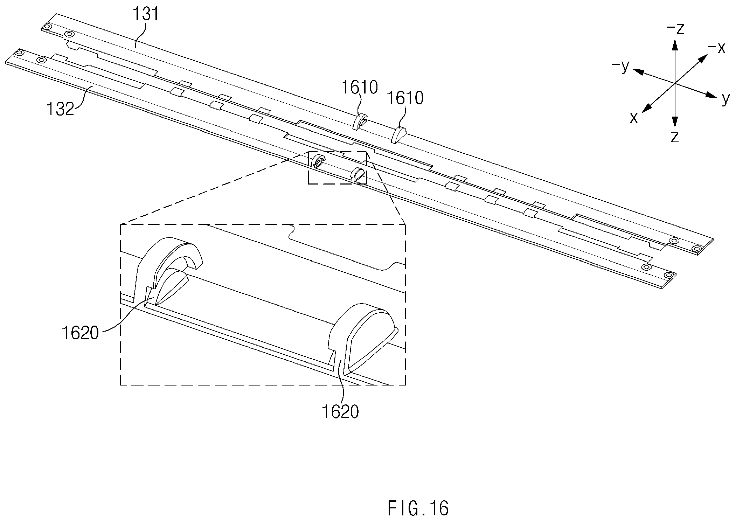

FIG. 16 is a view illustrating an example of the first wing plate and the second wing plate according to an embodiment.

Referring to FIGS. 1 to 16, the first wing plate 131 and the second wing plate 132 may include rail structures 1610 and 1620 formed on areas corresponding to the third hinge structure 200c, respectively. For example, the first wing plate 131 may include the ninth rail structure 1610 formed on the area corresponding to the fifth link member 1310 of the third hinge structure 200c, and the second wing plate 132 may include the tenth rail structure 1620 formed on the area corresponding to the sixth link member 1320 of the third hinge structure 200c.

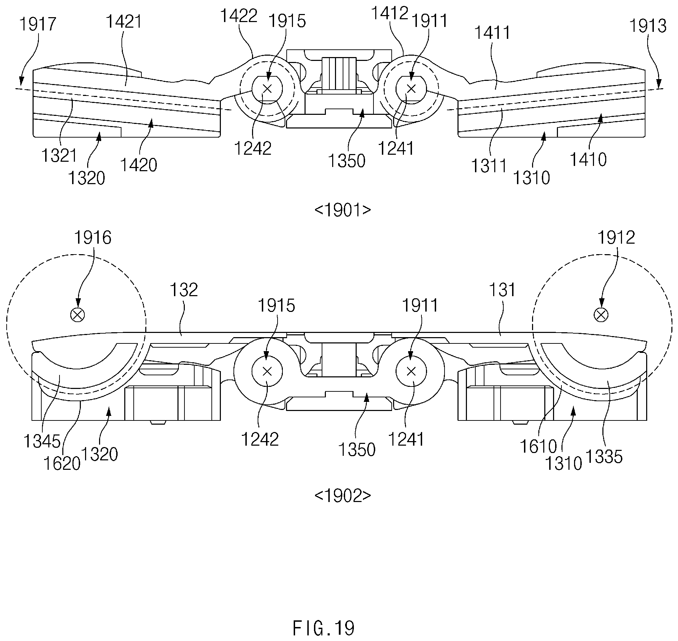

The ninth rail structure 1610 may protrude from the first wing plate 131. The ninth rail structure 1610 may include a groove having a shape corresponding to the ninth rail 1335 of the fifth link member 1310. The ninth rail 1335 of the fifth link member 1310 may form a virtual axis (e.g., a ninth axis (e.g., a ninth axis 1912 in FIG. 19)) about which the ninth rail structure 1610 of the first wing plate 131 rotates in place. The ninth rail structure 1610 may perform a rotational motion with respect to the ninth axis formed in the ninth rail 1335. The ninth rail structure 1610 and the ninth rail 1335 may perform a rotational motion in the clockwise or counterclockwise direction in conjunction with rotation of the first wing plate 131.

The tenth rail structure 1620 may protrude from the second wing plate 132 in the -z-axis direction. The tenth rail structure 1620 may include a groove having a shape corresponding to the tenth rail 1345 of the sixth link member 1320. The tenth rail 1345 of the sixth link member 1320 may form a virtual axis (e.g., a twelfth axis (e.g., a twelfth axis 1916 in FIG. 19)) about which the tenth rail structure 1620 of the second wing plate 132 rotates in place.

The tenth rail structure 1620 may perform a rotational motion with respect to the twelfth axis formed in the tenth rail 1345. The tenth rail structure 1620 and the tenth rail 1345 may perform a rotational motion in the clockwise or counterclockwise direction in conjunction with rotation of the second wing plate 132.

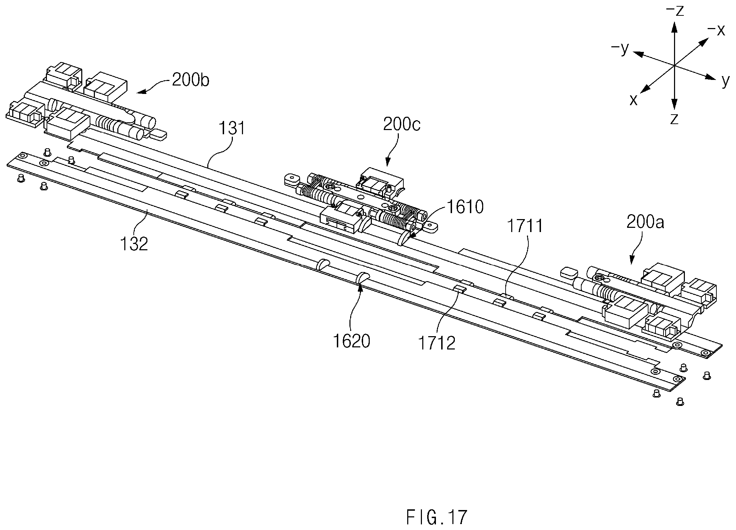

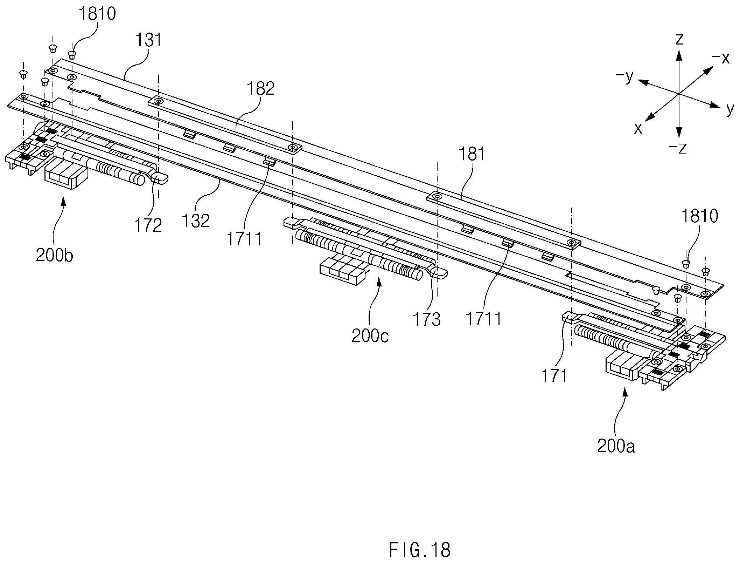

FIG. 17 illustrates an example of a rear view of the wing plates coupled with the hinge structures according to an embodiment. FIG. 18 illustrates an example of a front view of the wing plates coupled with the hinge structures according to an embodiment.

Referring to FIGS. 1 to 18, the electronic device according to an embodiment may include the first wing plate 131, the second wing plate 132, the first hinge structure 200a, the second hinge structure 200b, and the third hinge structure 200c.

At least one of the first hinge structure 200a or the second hinge structure 200b may be fixed to the wing plates 131 and 132 through fastening members 1810. The rotating members 210 and 220 of the first hinge structure 200a may be fixed to the first wing plate 131 and the second wing plate 132 through the fastening members 1810, respectively. The rotating members 210 and 220 of the second hinge structure 200b may be fixed to the first wing plate 131 and the second wing plate 132 through the fastening members 1810, respectively.

The third hinge structure 200c may be coupled to the rail structures 1610 and 1620 of the wing plates 131 and 132. The ninth rail 1335 of the fifth link member 1310 of the third hinge structure 200c may be coupled with the ninth rail structure 1610 of the first wing plate 131. The tenth rail 1345 of the sixth link member 1320 of the third hinge structure 200c may be coupled with the tenth rail structure 1620 of the second wing plate 132.

The first wing plate 131 and the second wing plate 132 may integrally rotate together with the rotating members 210 and 220 of each of the first hinge structure 200a and the second hinge structure 200b, and the third hinge structure 200c may perform a hinge operation in conjunction with the rotation of the first wing plate 131 and the second wing plate 132.

One or more center bar bridges 181 and 182 may be disposed between the first wing plate 131 and the second wing plate 132. The first center bar bridge 181 may be supported by a first support member 1711 formed on the first wing plate 131. The first support member 1711 may protrude toward the space between the first wing plate 131 and the second wing plate 132. The first center bar bridge 181 may be supported by a second support member 1712 formed on the second wing plate 132. The second support member 1712 may protrude toward the space between the first wing plate 131 and the second wing plate 132.

The first center bar bridge 181 may be disposed between the first center bar 171 of the first hinge structure 200a and the third center bar 173 of the third hinge structure 200c and may connect the first center bar 171 and the third center bar 173. The second center bar bridge 182 may be disposed between the second center bar 172 of the second hinge structure 200b and the third center bar 173 of the third hinge structure 200c and may connect the second center bar 172 and the third center bar 173.

The first center bar 171, the first center bar bridge 181, the third center bar 173, the second center bar bridge 182, and the second center bar 172 may be continuously disposed in a line. A crease defect in the folding area of the electronic device (e.g., the display) may be reduced, prevented or minimized by the first center bar 171, the first center bar bridge 181, the third center bar 173, the second center bar bridge 182, and the second center bar 172 that are continuously disposed. In particular, the proportion of the display that the center bars provide support to may be increased, thus reducing the occurrence and/or visibility of a crease in the foldable display when unfolded. An increase in the stability of the display under the folding area may also be achieved by the increased coverage of the center bars. Furthermore, this improvement may be obtained with little or no reduction in hinging robustness and/or functionality.

According to an embodiment, the first shaft 241 that forms the third axis of each of the first hinge structure 200a and the second hinge structure 200b and the third shaft 1241 that forms the tenth axis of the third hinge structure 200c may be disposed to face each other. The first shaft 241 and the third shaft 1241 may be disposed in a line under the first wing plate 131. For example, the third shaft 1241 of the third hinge structure 200c may be disposed in a line between the first shaft 241 of the first hinge structure 200a and the first shaft 241 of the second hinge structure 200b.

The second shaft 242 that forms the seventh axis of each of the first hinge structure 200a and the second hinge structure 200b and the fourth shaft 1242 that forms the thirteenth axis of the third hinge structure 200c may be disposed to face each other. The second shaft 242 and the fourth shaft 1242 may be disposed in a line under the second wing plate 132. For example, the fourth shaft 1242 of the third hinge structure 200c may be disposed in a line between the second shaft 242 of the first hinge structure 200a and the second shaft 242 of the second hinge structure 200b.

FIG. 19 is a view illustrating an example of the formation of axes of the third hinge structure 200c in the unfolded state of the electronic device according to an embodiment.

In FIG. 19, drawing 1901 illustrates an example of a section at the position where the arm members 1410 and 1420 are disposed in the third hinge structure 200c. Drawing 1902 illustrates an example of a section at the position where the wing plates 131 and 132 are disposed on the third hinge structure 200c.

Referring to FIGS. 1 to 19, the third shaft 1241 disposed in line with the first shaft 241 may be fastened with the third arm member 1410. A portion of the third shaft 1241 may be disposed on one side of the third arm member 1410 (e.g., in a through-hole of the third shaft mounting part 1412). The third shaft 1241 may serve as a tenth axis 1911 (or, a third real axis) about which the third arm member 1410 rotates. The seventh rail structure 1411 of the third arm member 1410 may perform a rotational motion (or, a sliding motion) with respect to an eleventh axis 1913 (or, a fourth virtual axis) within the seventh rail 1311 of the fifth link member 1310. In this case, the seventh rail structure 1411 and the seventh rail 1311 may be moved in the clockwise or counterclockwise direction in response to rotation of the fifth link member 1310 (e.g., the fifth link member 1310 rotates in the counterclockwise direction while the electronic device 100 is changed from the unfolded state (open) to the folded state and rotates in the clockwise direction while the electronic device 100 is changed from the folded state to the unfolded state (open)). Accordingly, the eleventh axis 1913 may be a moving axis that is moved in the clockwise or counterclockwise direction depending on the movement of the fifth link member 1310.

Similarly, the fourth shaft 1242 disposed in line with the second shaft 242 may be fastened with the fourth arm member 1420. A portion of the fourth shaft 1242 may be disposed on an opposite side of the fourth arm member 1420 (e.g., in a through-hole of the fourth shaft mounting part 1422). The fourth shaft 1242 may serve as a thirteenth axis 1915 (or, a fourth real axis) about which the fourth arm member 1420 rotates. The eighth rail structure 1421 of the fourth arm member 1430 may perform a rotational motion (or, a sliding motion) with respect to a fourteenth axis 1917 (or, a fifth virtual axis) within the eighth rail 1321 of the sixth link member 1320. In this case, the eighth rail structure 1421 and the eighth rail 1321 may be moved in the clockwise or counterclockwise direction in response to rotation of the sixth link member 1320 (e.g., the sixth link member 1320 rotates in the counterclockwise direction while the electronic device 100 is changed from the unfolded state (open) to the folded state and rotates in the clockwise direction while the electronic device 100 is changed from the folded state to the unfolded state (open)). Accordingly, the fourteenth axis 1917 may be a moving axis that is moved in the clockwise or counterclockwise direction depending on the movement of the sixth link member 1320.

The ninth rail structure 1610 of the first wing plate 131 may be fastened to the ninth rail 1335 of the fifth link member 1310. The tenth rail structure 1620 of the second wing plate 132 may be fastened to the tenth rail 1345 of the sixth link member 1320.

The ninth rail structure 1610 of the first wing plate 131 may rotate about the ninth axis 1912 (or, the third virtual axis) in the clockwise or counterclockwise direction within the ninth rail 1335 of the fifth link member 1310. The tenth rail structure 1620 of the second wing plate 132 may rotate about the twelfth axis 1916 (or, the fourth virtual axis) in the clockwise or counterclockwise direction within the tenth rail 1345 of the sixth link member 1320.

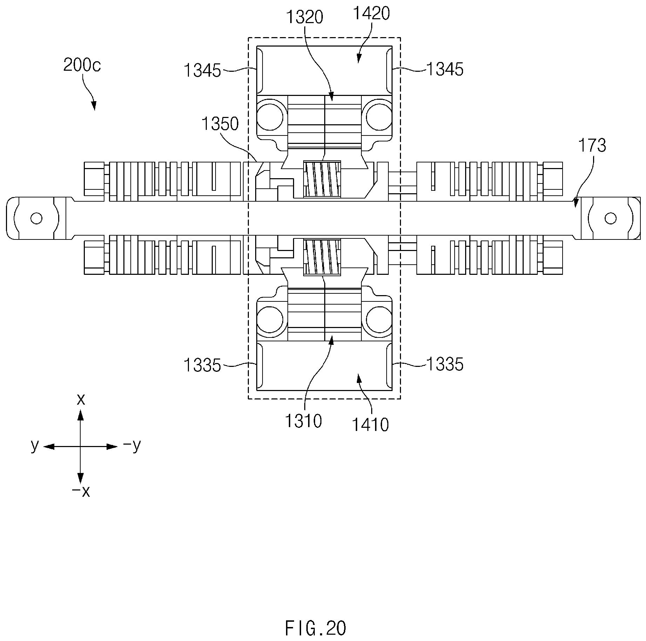

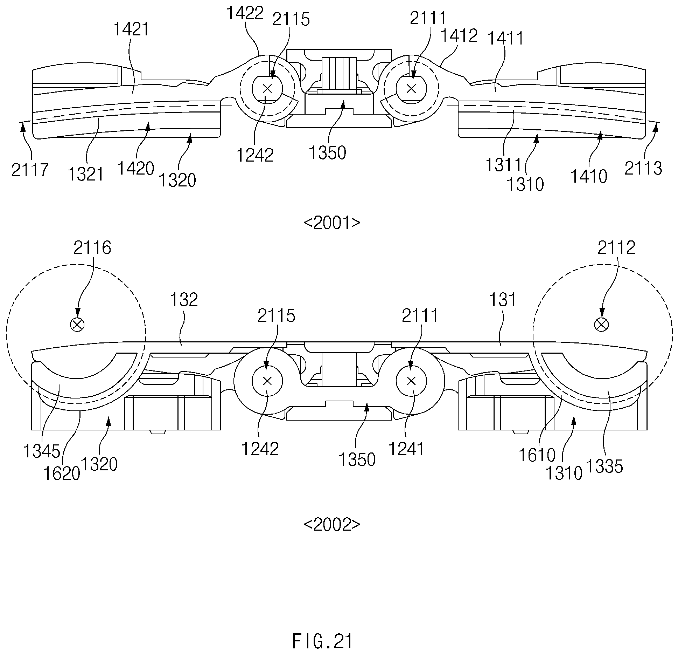

FIG. 20 is a plan view illustrating an example of the third hinge structure according to an embodiment. FIG. 21 is a view illustrating an example of the formation of axes of the third hinge structure 200c in the unfolded state of the electronic device according to an embodiment. In FIG. 21, drawing 2001 illustrates an example of a section at the position where the arm members 1410 and 1420 are disposed in the third hinge structure 200c. Drawing 2002 illustrates an example of a section at the position where the wing plates 131 and 132 are disposed on the third hinge structure 200c.

Referring to FIGS. 1 to 21, the third shaft 1241 disposed in line with the first shaft 241 may be fastened with the third arm member 1410. A portion of the third shaft 1241 may be disposed on one side of the third arm member 1410 (e.g., in a through-hole of the third shaft mounting part 1412). The third shaft 1241 may serve as a tenth axis 2111 (or, a third real axis) (e.g., the tenth axis 1911 of FIG. 19) about which the third arm member 1410 rotates. The seventh rail structure 1411 of the third arm member 1410 may perform a rotational motion (or, a sliding motion) with respect to an eleventh axis 2113 (or, a fourth virtual axis) within the seventh rail 1311 of the fifth link member 1310. In this case, the seventh rail structure 1411 and the seventh rail 1311 may be moved in the clockwise or counterclockwise direction in response to rotation of the fifth link member 1310 (e.g., the fifth link member 1310 rotates in the counterclockwise direction while the electronic device 100 is changed from the unfolded state (open) to the folded state and rotates in the clockwise direction while the electronic device 100 is changed from the folded state to the unfolded state (open)). Accordingly, the eleventh axis 2113 may be a moving axis that is moved in the clockwise or counterclockwise direction depending on the movement of the fifth link member 1310.

Similarly, the fourth shaft 1242 disposed in line with the second shaft 242 may be fastened with the fourth arm member 1420. A portion of the fourth shaft 1242 may be disposed on an opposite side of the fourth arm member 1420 (e.g., in a through-hole of the fourth shaft mounting part 1422). The fourth shaft 1242 may serve as a thirteenth axis 2115 (or, a fourth real axis) (e.g., the thirteenth axis 1915 of FIG. 19) about which the fourth arm member 1420 rotates. The eighth rail structure 1421 of the fourth arm member 1420 may perform a rotational motion (or, a sliding motion) with respect to a fourteenth axis 2117 (or, a fifth virtual axis) within the eighth rail 1321 of the sixth link member 1320. In this case, the eighth rail structure 1421 and the eighth rail 1321 may be moved in the clockwise or counterclockwise direction in response to rotation of the sixth link member 1320 (e.g., the sixth link member 1320 rotates in the counterclockwise direction while the electronic device 100 is changed from the unfolded state (open) to the folded state and rotates in the clockwise direction while the electronic device 100 is changed from the folded state to the unfolded state (open)). Accordingly, the fourteenth axis 2117 may be a moving axis that is moved in the clockwise or counterclockwise direction depending on the movement of the sixth link member 1320.

The ninth rail structure 1610 of the first wing plate 131 may be fastened to the ninth rail 1335 of the fifth link member 1310. The tenth rail structure 1620 of the second wing plate 132 may be fastened to the tenth rail 1345 of the sixth link member 1320.

The ninth rail structure 1610 of the first wing plate 131 may rotate about the ninth axis 1912 (or, the third virtual axis) in the clockwise or counterclockwise direction within the ninth rail 1335 of the fifth link member 1310. The tenth rail structure 1620 of the second wing plate 132 may rotate about the twelfth axis 1916 (or, the fourth virtual axis) (e.g., the twelfth axis 1916 of FIG. 19) in the clockwise or counterclockwise direction within the tenth rail 1345 of the sixth link member 1320.

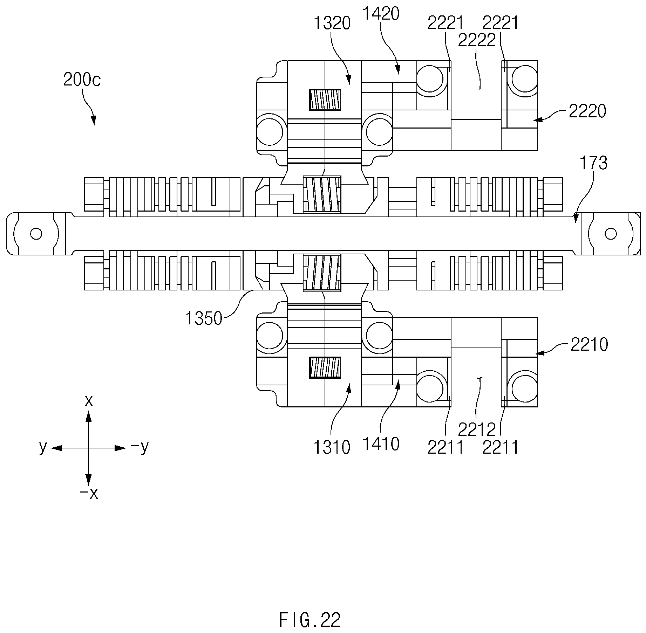

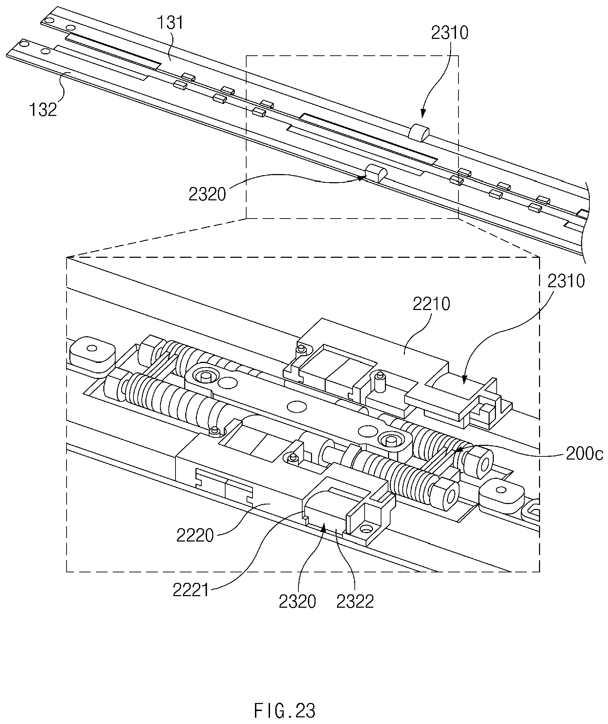

FIG. 22 is a view illustrating an example of the third hinge structure according to an embodiment, and FIG. 23 is a view illustrating an example of the wing plates coupled with the third hinge structure according to an embodiment.

Referring to FIGS. 1 to 23, the components of the third hinge structure illustrated in FIGS. 22 and 23 may correspond to the components of the hinge structure described above with reference to FIGS. 1 to 21, except for a structure related to a seventh link member 2210 and an eighth link member 2220. Accordingly, detailed description of the remaining components other than the seventh link member 2210 and the eighth link member 2220 will be replaced with the contents described above with reference to FIGS. 1 to 21. For example, the structures and configurations of the third arm member 1410, the fourth arm member 1420, the fifth link member 1310, the sixth link member 1320, and the third center bar 173 will be replaced with the contents described with reference to FIGS. 13 to 21.

According to an embodiment, the seventh link member 2210 may extend from the fifth link member 1310 in the y-axis direction and/or the -y-axis direction. For example, the seventh link member 2210 may extend from the fifth link member 1310 in the -y-axis direction. The seventh link member 2210 may extend so as to be integrated with the fifth link member 1310. The seventh link member 2210 may include a first opening area 2212, a portion of which is open in the -x-axis direction. The seventh link member 2210 may include inner sidewalls facing each other with the first opening area 2212 therebetween, and a first sub-rail 2211 protruding toward the first opening area 2212 may be formed on each of the inner sidewalls facing in the y-axis direction and/or the -y-axis direction. The first wing plate 131 may include a first spacer 2310 protruding from the first wing plate 131. First sub-rail structures fastened with the first sub-rails 2211 may be formed on opposite sides of the first spacer 2310 (e.g., side surfaces facing in the y-axis direction and/or the -y-axis direction). The ninth rail structure of the first wing plate 131 may be seated in the first opening area 2212 of the seventh link member 2210, and the first sub-rails 2211 may guide a rotation or sliding operation of the first sub-rail structures.

According to an embodiment, the eighth link member 2220 may extend from the sixth link member 1320 in the y-axis direction and/or the -y-axis direction. For example, the eighth link member 2220 may extend from the sixth link member 1320 in the -y-axis direction. The eighth link member 2220 may extend so as to be integrated with the sixth link member 1320. The eighth link member 2220 may include a second opening area 2222, a portion of which is open in the x-axis direction. The eighth link member 2220 may include inner sidewalls facing each other with the second opening area 2222 therebetween, and a second sub-rail 2221 protruding toward the second opening area 2222 may be formed on each of the inner sidewalls facing in the y-axis direction and/or the -y-axis direction. The second wing plate 132 may include a second spacer 2320 protruding from the second wing plate 132. Second sub-rail structures fastened with the second sub-rails 2221 may be formed on opposite sides of the second spacer 2320 (e.g., side surfaces facing in the y-axis direction and/or the -y-axis direction). The tenth rail structure of the second wing plate 132 may be seated in the second opening area 2222 of the eighth link member 2220, and the second sub-rails 2221 may guide a rotation or sliding operation of the second sub-rail structures.

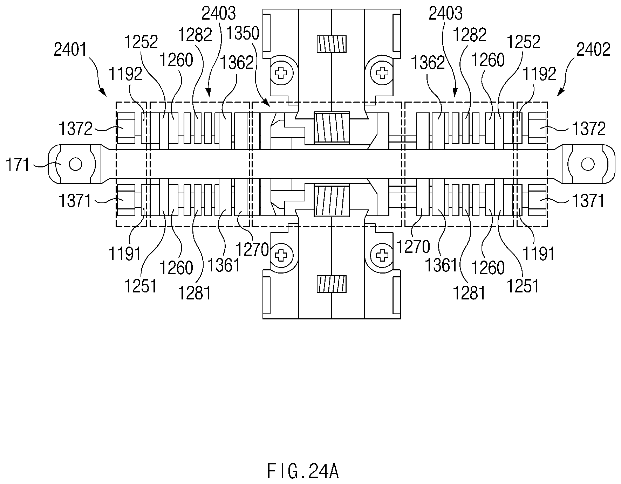

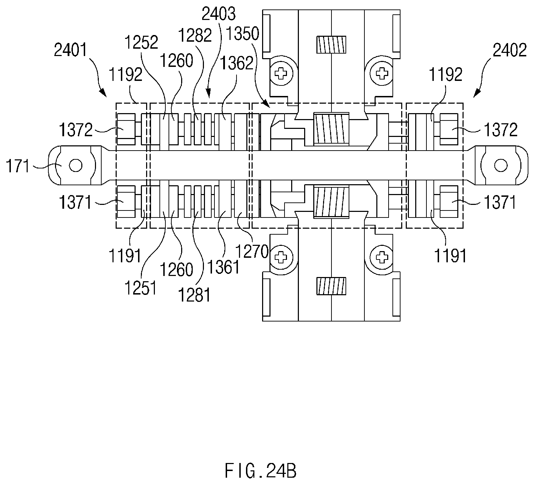

FIGS. 24A and 24B are views illustrating examples of the third hinge structure according to an embodiment.

Referring to FIGS. 1 to 24A, the third hinge structure according to an embodiment may include a first detent structure 2411, a first center bar driving structure 2401, a second detent structure 2412, and a second center bar driving structure 2402. The first detent structure 2411 and the first center bar driving structure 2401 may be disposed to be symmetrical to the second detent structure 2412 and the second center bar driving structure 2402 with respect to a second interlocking member 1350. The first detent structure 2411 and the first center bar driving structure 2401 may be sequentially disposed on one side with respect to the second interlocking member 1350. The second detent structure 2412 and the second center bar driving structure 2402 may be sequentially disposed on an opposite side with respect to the second interlocking member 1350.

At least one of the first detent structure 2411 or the second detent structure 2412 may include at least one of a second shaft bracket 1270, cam members 1361 and 1362, a plurality of elastic members 1281 and 1282, a plurality of ring structures 1251 and 1252, or a plurality of second torque brackets 1260.

At least one of the first center bar driving structure 2401 or the second center bar driving structure 2402 may include at least one of a plurality of center bar brackets 1191 and 1192 and/or coupling members 1371 and 1372. For example, the first center bar driving structure 2401 and the second center bar driving structure 2402 may include the plurality of center bar brackets 1191 and 1192 coupled with the center bar 173.

Referring to FIGS. 1 to 24B, the third hinge structure according to an embodiment may include a first detent structure 2411, a first center bar driving structure 2401, and a second center bar driving structure 2402. The first detent structure 2411 and the first center bar driving structure 2401 may be sequentially disposed on one side with respect to a second interlocking member 1350. The second center bar driving structure 2402 may be disposed on an opposite side with respect to the second interlocking member 1350.

The first detent structure 2411 may include at least one of a second shaft bracket 1270, cam members 1361 and 1362, a plurality of elastic members 1281 and 1282, a plurality of ring structures 1251 and 1252, or a plurality of second torque brackets 1260.

At least one of the first center bar driving structure 2401 or the second center bar driving structure 2402 may include at least one of a plurality of center bar brackets 1191 and 1192 and/or coupling members 1371 and 1372. For example, the first center bar driving structure 2401 and the second center bar driving structure 2402 may include the plurality of center bar brackets 1191 and 1192 coupled with the center bar 173.

The third hinge structure according to an embodiment may include the one second interlocking member 1350 and the at least two detent structures 2311 and 2412 illustrated in FIG. 24A. The third hinge structure illustrated in FIG. 24A may generate a relatively large detent force and/or a relatively large flex force through the at least two detent structures and thus may maintain the unfolded state (open), the folded state (close), and the intermediate state of the electronic device at desired angles.

The third hinge structure according to an embodiment may include the one second interlocking member 1350 and the at least one detent structure 2411 illustrated in FIG. 24B. The third hinge structure illustrated in FIG. 24B may generate a desired detent force and/or a desired flex force through the one detent structure 2411, and thus the third hinge structure may be made smaller.

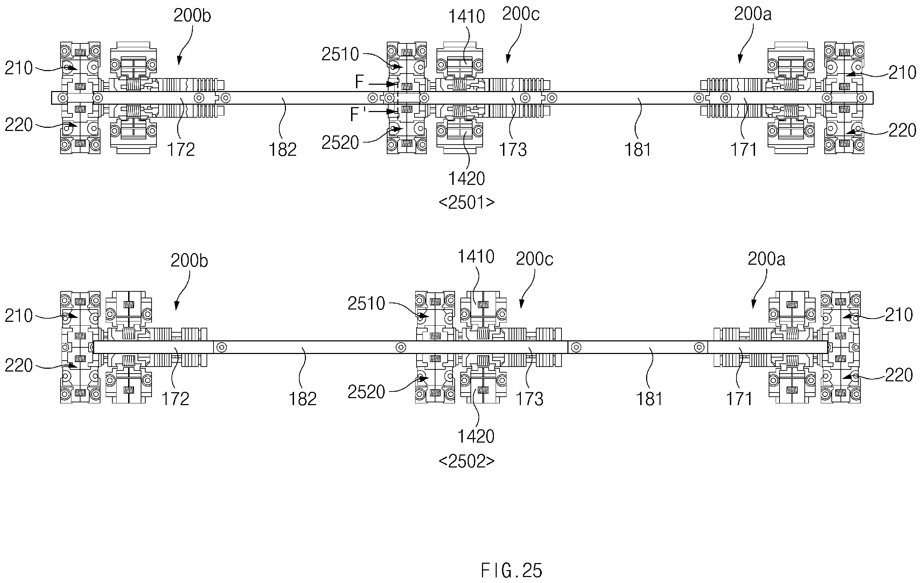

FIG. 25 is a view illustrating examples of a plurality of hinge structures connected through center bar bridges according to an embodiment. In FIG. 25, drawing 2501 illustrates an example of center bar bridges and center bars continuously disposed from one side of the first hinge structure and to an opposite side of the second hinge structure, and drawing 2502 illustrates an example of center bar bridges and center bars continuously disposed from a portion of the first hinge structure to a portion of the second hinge structure.

Referring to FIGS. 1 to 25, the plurality of hinge structures may include the first hinge structure 200a, the second hinge structure 200b, and the third hinge structure 200c. The third hinge structure 200c may be disposed between the first hinge structure 200a and the second hinge structure 200b. The first center bar 171 of the first hinge structure 200a may be connected with the third center bar 173 of the third hinge structure 200c through the first center bar bridge 181. The second center bar 172 of the second hinge structure 200b may be connected with the third center bar 173 of the third hinge structure 200c through the second center bar bridge 182.

The third hinge structure 200c may not include a rotating member as described above with reference to FIGS. 1 to 24B, or may include a third rotating member 2510 and a fourth rotating member 2520 as illustrated in FIG. 25.

According to an embodiment, portions of the rotating members 210, 220, 2510, and 2520 of at least one of the first hinge structure 200a, the second hinge structure 200b, or the third hinge structure 200c may be removed. The overall weight of the electronic device may be prevented from being increased due to the third rotating member 2510 and the fourth rotating member 2520.

In drawing 2501, the rotating members 210, 220, 2510, and 2520 of the first hinge structure 200a, the second hinge structure 200b, and the third hinge structure 200c may overlap portions of the center bars 171, 172, and 173. Portions of the rotating members 210, 220, 2510, and 2520 of the first hinge structure 200a, the second hinge structure 200b, and the third hinge structure 200c may be removed. A portion of the first rotating member 210 and a portion of the second rotating member 220 of each of the first hinge structure 200a and the second hinge structure 200b may be removed. An area of the first rotating member 210 that is adjacent to the second rotating member 220 may be removed, and an area of the second rotating member 220 that is adjacent to the first rotating member 210 may be removed. At least one of the first center bar 171 or the second center bar 172 may be formed such that an area between the first rotating member 210 and the second rotating member 220 has a narrower width than the remaining area. The first center bar 171 (and/or, the second center bar 172) may be seated between the first rotating member 210 and the second rotating member 220. Accordingly, the first center bar 171 may be continuously disposed with the first center bar bridge 181 without a non-continuous section, and the second center bar 172 may be continuously disposed with the second center bar bridge 182 without a non-continuous section. A portion of the third rotating member 2510 and a portion of the fourth rotating member 2520 of the third hinge structure 200c may be removed. An area of the third rotating member 2510 that is adjacent to the fourth rotating member 2520 may be removed, and an area of the fourth rotating member 2520 that is adjacent to the third rotating member 2510 may be removed. The third center bar 173 may be formed such that an area between the third rotating member 2510 and the fourth rotating member 2520 has a narrower width than the remaining area. The third center bar 173 may be seated between the third rotating member 2510 and the fourth rotating member 2520. The third center bar 173 may be continuously disposed between the first center bar bridge 181 and the second center bar bridge 182 without a non-continuous section. Accordingly, the first center bar 171, the first center bar bridge 181, the third center bar 173, the second center bar bridge 182, and the second center bar 172 may be continuously disposed without a non-continuous section.

In drawing 2502, the rotating members 2510 and 2520 of the third hinge structure 200c disposed at the center among the first hinge structure 200a, the second hinge structure 200b, and the third hinge structure 200c may overlap a portion of the center bar 173, and the rotating members 210 and 220 of the hinge structures 200a and 200b disposed on the outsides may not overlap the center bars 171 and 172. The first rotating member 210 and the second rotating member 220 of each of the first hinge structure 200a and the second hinge structure 200b may be formed so as not to overlap the center bars 171 and 172. A partial region of the first rotating member 210 and a partial region of the second rotating member 220 of each of the first hinge structure 200a and the second hinge structure 200b may not be removed. Accordingly, the first rotating member 210 and the second rotating member 220 of each of the first hinge structure 200a and the second hinge structure 200b may secure rigidity that affects rotation performance.

Portions of the rotating members 2510 and 2520 of the third hinge structure 200c disposed between the first center bar bridge 181 and the second center bar bridge 182 may be removed. An area of the third rotating member 2510 that is adjacent to the fourth rotating member 2520 may be removed, and an area of the fourth rotating member 2520 that is adjacent to the third rotating member 2510 may be removed. The third center bar 173 may be formed such that an area between the third rotating member 2510 and the fourth rotating member 2520 has a narrower width than the remaining area. The third center bar 173 may be seated between the third rotating member 2510 and the fourth rotating member 2520. The third center bar 173 may be continuously disposed between the first center bar bridge 181 and the second center bar bridge 182 without a non-continuous section. Accordingly, the first center bar 171, the first center bar bridge 181, the third center bar 173, the second center bar bridge 182, and the second center bar 172 may be continuously disposed without a non-continuous section.

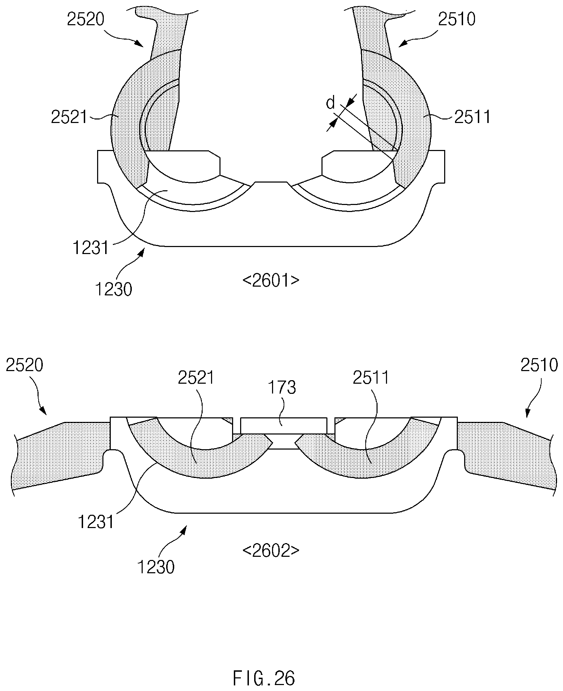

FIG. 26 is a view illustrating an example of the third hinge structure according to an embodiment. In FIG. 26, drawing 2601 illustrates an example of a section of the folded third hinge structure 200c taken along line F-F' in FIG. 25. In FIG. 26, drawing 2602 illustrates an example of a section of the unfolded third hinge structure 200c taken along line F-F' in FIG. 25. For example, drawing 2601 and drawing 2602 illustrate an example of a section at the position where a second fixed bracket 1230 and the rotating members 2510 and 2520 are disposed in the third hinge structure 200c.

Referring to FIGS. 1 to 26, the second fixed bracket 1230 may include a structure to which a portion of the third rotating member 2510 and a portion of the fourth rotating member 2520 are fastened so as to be rotatable. The second fixed bracket 1230 may include an eleventh rail structure 1231 and a twelfth structure 1232 to which an eleventh rail 2511 of the third rotating member 2510 and a twelfth rail 2521 of the fourth rotating member 2520 are fastened so as to be rotatable. A portion of the eleventh rail 2511 of the third rotating member 2510 and a portion of the twelfth rail 2521 of the fourth rotating member 2520 may be removed to prevent an increase in the weight of the third hinge structure 200c.

In drawing 2601, in the folded state of the electronic device, the eleventh rail 2511 of the third rotating member 2510 and the twelfth rail 2521 of the fourth rotating member 2520 may be fastened to the eleventh rail structure 1231 and the twelfth structure 1232 of the second fixed bracket 1230, respectively, by a specified width d. In the folded state of the electronic device, the eleventh rail 2511 of the third rotating member 2510 and the twelfth rail 2521 of the fourth rotating member 2520 may be coupled to the second fixed bracket 1230 without insufficient locking amount. Accordingly, even though a portion of the eleventh rail 2511 of the third rotating member 2510 and a portion of the twelfth rail 2521 of the fourth rotating member 2520 are removed, separation of the eleventh rail 2511 and the twelfth rail 2521 from the fixed bracket 1230, bending of the eleventh rail 2511 and the twelfth rail 2521, deterioration in folding quality, and/or damage to the rotating members 2510 and 2520 may be prevented or minimized when the electronic device drops.

In drawing 2602, in the unfolded state of the electronic device, the third center bar 173 may be disposed in the area where the eleventh rail 2511 and the twelfth rail 2521 are removed, because a portion of the eleventh rail 2511 of the third rotating member 2510 and a portion of the twelfth rail 2521 of the fourth rotating member 2520 are removed. The third center bar 173 may not further protrude upward beyond the fixed bracket 1230 and may form the same plane as the fixed bracket 1230. Accordingly, deterioration in the screen quality of the display disposed on the third center bar 173 may be prevented or minimized.

According to an embodiment, the shapes of the third rotating member 2510, the fourth rotating member 2520, and the third center bar 173 of the third hinge structure 200c described with reference to FIG. 26 may be applied to the shapes of the rotating members 210 and 220 and the center bar 171 or 172 of at least one of the first hinge structure 200a or the second hinge structure 200b described with reference to FIGS. 1 to 25.

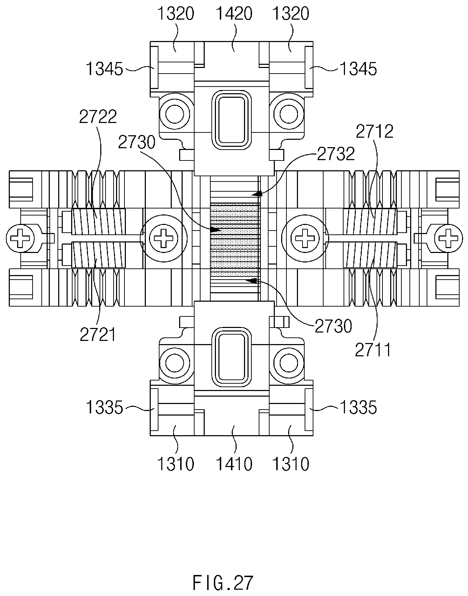

FIG. 27 is a view illustrating an example of the third hinge structure according to an embodiment.

The components of the third hinge structure illustrated in FIG. 27 may correspond to the components of the third hinge structure described above with reference to FIGS. 1 to 26, except that a gear interlocking member 2730 is included instead of the spiral interlocking member that operates in conjunction with the third arm member 1410 and the fourth arm member 1420. Accordingly, detailed description of the remaining components other than the structure related to the gear interlocking member 2730 will be replaced with the contents described above with reference to FIGS. 1 to 26.

According to an embodiment, the gear interlocking member 2730 may include a plurality of gears engaged with each other. One of the plurality of gears of the gear interlocking member 2730 may be engaged with a gear pattern 2731 formed on one side of the third arm member 1410, and one of the remaining gears of the gear interlocking member 2730 may be engaged with a gear pattern 2732 formed on one side of the fourth arm member 1420. Since the gear interlocking member 2730 is engaged with the plurality of gear patterns 2731 and 2732, the gear interlocking member 2730 may interlock the third arm member 1410 and the fourth arm member 1420.

According to an embodiment, detent structures 2711, 2712, 2721, and 2722 may be disposed on opposite sides of the gear interlocking member 2730. The detent structures 2711, 2712, 2721, and 2722 may be disposed between elastic members (e.g., the elastic members 1281 and 1282 of FIGS. 24A and 24B) and may overlap a center bar (e.g., the center bar 173 of FIGS. 24A and 24B).

According to an embodiment, the shapes of the gear interlocking member 2730 and the detent structures 2711, 2712, 2721, and 2722 of the third hinge structure 200c described with reference to FIG. 27 may be applied to at least one of the first hinge structure 200a or the second hinge structure 200b described with reference to FIGS. 1 to 25.

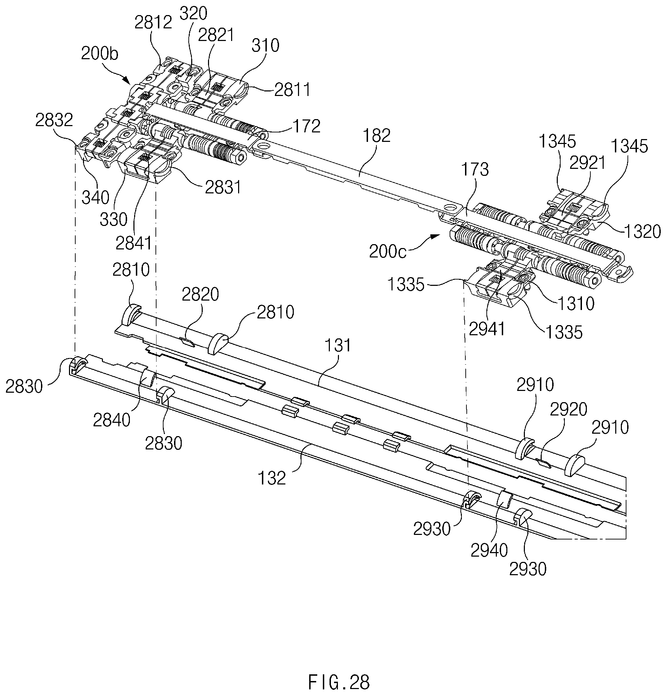

FIG. 28 is a view illustrating an example of the hinge structures and the wing plates according to an embodiment.

Referring to FIG. 28, the first wing plate 131 may include a first wing rail structure 2810 and a first wing rail 2820 that are disposed in the area corresponding to each of the first hinge structure 200a and the second hinge structure 200b. The first wing rail structure 2810 may be coupled to a wing rail 2811 of the first link member 310 and a wing rail 2812 of the second link member 320 of each of the first hinge structure 200a and the second hinge structure 200b. The first wing rail 2820 may be coupled to a rail structure 2821 formed on the first arm member (e.g., the first arm member 410 of FIG. 4) of each of the first hinge structure 200a and the second hinge structure 200b. The first wing plate 131 may include a second wing rail structure 2910 and a second wing rail 2920 that are disposed in the area corresponding to the third hinge structure 200c. The second wing rail structure 2910 may be fastened with the tenth rail 1345 formed on the sixth link member 1320 of the third hinge structure 200c, and the second wing rail 2920 may be coupled to a rail structure 2921 formed on the third arm member 1410 of the third hinge structure 200c. The first wing plate 131 may perform a rotational motion in conjunction with the first hinge structure 200a and the second hinge structure 200b as well as the third hinge structure 200c.

The second wing plate 132 may include a third wing rail structure 2830 and a third wing rail 2840 that are disposed in the area corresponding to each of the first hinge structure 200a and the second hinge structure 200b. The third wing rail structure 2830 may be coupled to a wing rail 2831 of the third link member 330 and a wing rail 2832 of the fourth link member 340 of each of the first hinge structure 200a and the second hinge structure 200b. The third wing rail 2840 may be coupled to a rail structure 2841 formed on the second arm member (e.g., the second arm member 420 of FIG. 4) of each of the first hinge structure 200a and the second hinge structure 200b. The second wing plate 132 may include a fourth wing rail structure 2930 and a fourth wing rail 2940 that are disposed in the area corresponding to the third hinge structure 200c. The fourth wing rail structure 2930 may be fastened with the ninth rail 1335 formed on the fifth link member 1310 of the third hinge structure 200c, and the fourth wing rail 2940 may be coupled to a rail structure 2941 formed on the fourth arm member (e.g., the fourth arm member 1420 of FIG. 13) of the third hinge structure 200c. The second wing plate 132 may perform a rotational motion in conjunction with the first hinge structure 200a and the second hinge structure 200b as well as the third hinge structure 200c.

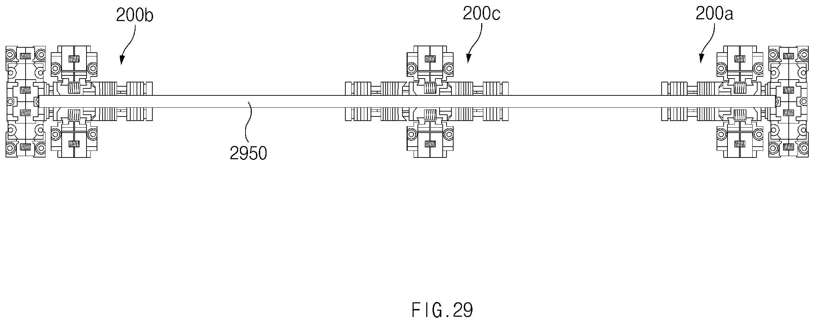

FIG. 29 is a view illustrating an example of the hinge structures according to an embodiment.

Referring to FIGS. 1 to 29, the plurality of hinge structures may include the first hinge structure 200a, the second hinge structure 200b, and the third hinge structure 200c. The third hinge structure 200c may be disposed between the first hinge structure 200a and the second hinge structure 200b. The first hinge structure 200a, the second hinge structure 200b, and the third hinge structure 200c may be connected through an integrated center bar 2950. The integrated center bar 2950 may have a shape corresponding to the structure in which the first center bar (e.g., the first center bar 171 of FIG. 25), the first center bar bridge (e.g., the first center bar bridge 181 of FIG. 25), the third center bar (e.g., the third center bar 173 of FIG. 25), the second center bar bridge (e.g., the second center bar bridge 182 of FIG. 25), and the second center bar (e.g., the second center bar 172 of FIG. 25) described above are continuously disposed.

According to an embodiment, the integrated center bar 2950 may be formed such that the area corresponding to the rotating members of each of the plurality of hinge structures 200a, 200b, and 200c has a small width and the remaining area has a large width.

According to an embodiment, the integrated center bar 2950 may be formed such that the area corresponding to the rotating members of the hinge structure 200c disposed at the center among the plurality of hinge structures 200a, 200b, and 200c has a small width and the remaining area has a large width. In addition, the integrated center bar 2950 may not overlap the rotating members of the hinge structures 200a and 200b disposed on the outsides among the plurality of hinge structures 200a, 200b, and 200c. The integrated center bar 2950 may be disposed on the remaining areas other than the rotating members of the hinge structures 200a and 200b disposed on the outsides among the plurality of hinge structures 200a, 200b, and 200c.

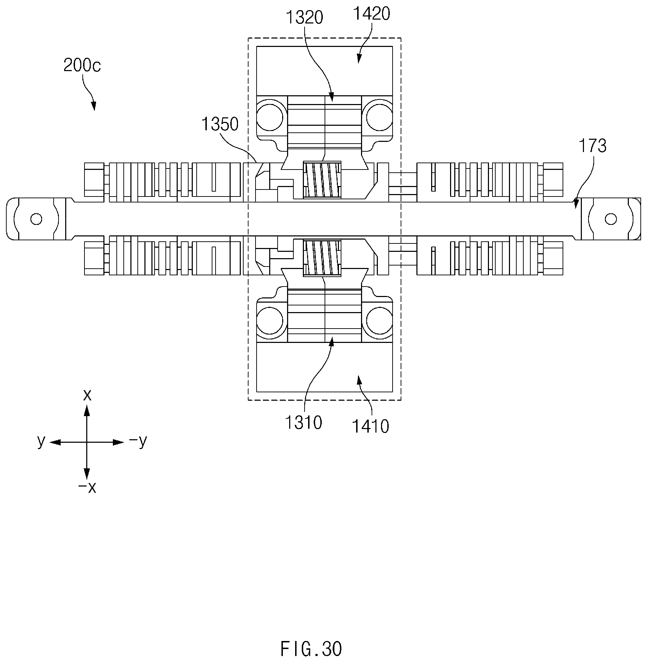

FIG. 30 is a view illustrating an example of the third hinge structure according to an embodiment.

Referring to FIGS. 1 to 30, the components of the third hinge structure 200c illustrated in FIG. 30 may correspond to the components of the hinge structure described above with reference to FIGS. 1 to 29, except for the structure related to the fifth link member 1310 and the sixth link member 1320. Accordingly, detailed description of the remaining components other than the fifth link member 1310 and the sixth link member 1320 will be replaced with the contents described above with reference to FIGS. 1 to 29. For example, the structures and configurations of the third arm member 1410, the fourth arm member 1420, and the third center bar 173 will be replaced with the contents described with reference to FIGS. 13 to 29.

When the third hinge structure 200c less affects the rotation of the wing plates (e.g., the wing plates 131 and 132 of FIG. 2), the fifth link member 1310 of the third hinge structure 200c may not include the ninth rail (e.g., the ninth rail 1335 of FIGS. 14A and 14B) coupled with the first wing plate, and the sixth link member 1320 of the third hinge structure 200c may not include the tenth rail (e.g., the tenth rail 1345 of FIGS. 14A and 14B) coupled with the second wing plate.

The third hinge structure may perform a hinge operation through the third shaft 1241 that rotates about the tenth axis (e.g., the tenth axis 2111 of FIG. 21), the third arm member 1410 and the fifth link member 1310 that rotate about the eleventh axis (e.g., the eleventh axis 2113 of FIG. 21), the fourth shaft 1242 that rotates about the thirteenth axis (e.g., the thirteenth axis 2115 of FIG. 21), and the fourth arm member 1420 and the sixth link member 1320 that rotate about the fourteenth axis (e.g., the fourteenth axis 2117 of FIG. 21).

Meanwhile, the above-described hinge structures are not limited to the embodiments described with reference to the drawings, and the hinge structures described with reference to the drawings may be applied in combination. Furthermore, although features are described in combination in this disclosure, the scope of the disclosure is not limited to such combinations. In particular, this disclosure covers alternative combinations unless noted as incompatible and features may be omitted from the combinations described herein, for example, when features do not directly interact with other features/components of an embodiment and/or are not required to achieve the advantage of the embodiment.

In addition, in the above description, the structure related to the rotational motion has been described as the rail or the rail structure. However, the disclosure is not limited to the term, and the term assigned to the corresponding component may be changed depending on a point of view. For example, the rail may include a protrusion that protrudes in a direction protruding from a flat sidewall surface (or, a bottom surface) (or, in a direction rising from the bottom surface) and has a curved or arc-shaped cross-section. The rail structure may include a structure in which arc-shaped protrusions are arranged to be spaced apart from each other by a certain gap and thus an arc-shaped empty space is formed between the protrusions. Accordingly, the rail structure may rotate or slide along the rail when fastened to the rail and rotated by external pressure. Meanwhile, the term of the above-described rail or rail structure may be read differently depending on a point of view, but the disclosure is not limited thereto. That is, the rail or the rail structure may be disposed in different structures for operation thereof. In this case, one of the rail and the rail structure may be formed in the different structures, or at least a portion may be formed as the rail and the remaining portion may be formed as the rail structure.

Further examples are set out in the following paragraphs, where the subject matter of these paragraphs may be combined unless incompatible.

As described above, a foldable electronic device according to at least one embodiment among various embodiments may include a display 160, a first housing 110 and a second housing 120 in each of which at least a portion of the display is accommodated, a first wing plate 131 that is disposed in the first housing 110 and that supports a folding area of the display, a second wing plate 132 that is disposed in the second housing 120 and that supports the folding area of the display, a plurality of hinge structures 200a, 200b, and 200c that foldably connect the first housing 110 and the second housing 120, and a hinge housing 150 on which the plurality of hinge structures are seated. The plurality of hinge structures may include a first hinge structure 200a and a second hinge structure 200b spaced apart from each other and a third hinge structure 200c disposed between the first hinge structure 200a and the second hinge structure 200b and engaged with the first wing plate 131 and the second wing plate 132 to rotate in conjunction with the first wing plate 131 and the second wing plate 132.

The first hinge structure 200a may include a first center bar 171 that extends in a first direction, the second hinge structure 200b may include a second center bar 172 that extends in a second direction, and the third hinge structure 200c may include a third center bar 173 disposed between the first center bar 171 and the second center bar 172.

The third center bar 173 may be continuously formed to cross the third hinge structure 200c.

The foldable electronic device may further include a first center bar bridge 181 that connects the first center bar 171 and the third center bar 173 and a second center bar bridge 182 that connects the second center bar 172 and the third center bar 173.

The first center bar 171, the first center bar bridge 181, the third center bar 173, the second center bar bridge 182, and the second center bar 172 may be arranged in a line without a non-continuous section.

At least one of the first center bar, the second center bar, or the third center bar may include a first guide structure 177 including a first slot 175a open in a third direction different from the first direction and the second direction and a second slot 175b open in a fourth direction opposite to the third direction and a second guide structure 178 that is spaced apart from the first guide structure 177 and that includes a third slot 176a open in the third direction and a fourth slot 176b open in the fourth direction.

At least one of the first hinge structure 200a or the second hinge structure 200b may include a fixed bracket 230 at least partially seated on the hinge housing, a first rotating member 210 and a second rotating member 220 coupled to the fixed bracket, a first arm member 410 that rotates in response to rotation of the first rotating member, a second arm member 420 that rotates in response to rotation of the second rotating member, a first shaft 241 fastened to the first arm member 410, a second shaft 242 fastened to the second arm member 420, a first link member 310 that supports a rotation operation or a sliding operation of the first rotating member, a second link member 320 that supports a rotation operation or a sliding operation of the second rotating member, a third link member 330 that supports a rotation operation or a sliding operation of the first arm member, a fourth link member 340 that supports a rotation operation or a sliding operation of the second arm member, and a first interlocking member 350 disposed to be engaged with the first arm member and the second arm member.

At least one of the first center bar or the second center bar may not overlap at least one of the first rotating member 210 or the second rotating member 220.

At least one of the first center bar or the second center bar may be formed such that an area corresponding to the first rotating member 210 and the second rotating member 220 has a narrower width than the remaining area other than the first rotating member 210 and the second rotating member 220.

At least one of the first hinge structure 200a or the second hinge structure 200b may further include a first shaft bracket 270 that fixes the first shaft and the second shaft, one or more first torque brackets 260 disposed between the first shaft bracket and the first interlocking member, a plurality of ring structure 251 and 252 disposed between the first shaft bracket and the first interlocking member to alternate with the one or more first torque brackets 260, a first center bar bracket 191 including a plurality of protrusion areas coupled with the first slot, a second center bar bracket 192 including a plurality of protrusion areas coupled with the second slot, a third center bar bracket 193 including a plurality of protrusion areas coupled with the third slot, a fourth center bar bracket 194 including a plurality of protrusion areas coupled with the fourth slot, a first cam 361 disposed between the first center bar bracket and the first shaft bracket, a second cam 362 disposed between the second center bar bracket and the first shaft bracket, a first elastic member 281 disposed between the first cam 361 and the first center bar bracket 191, and a second elastic member 282 disposed between the second cam 362 and the second center bar bracket 192.

The third hinge structure 200c may include a fifth link member 1310 that rotates in response to rotation of the first wing plate 131, a sixth link member 1320 that rotates in response to rotation of the second wing plate 132, a third arm member 1410 that operates in conjunction with the rotation of the fifth link member 1310, a fourth arm member 1420 that operates in conjunction with the rotation of the sixth link member 1320, a third shaft 1241 fastened to the third arm member 1410, a fourth shaft 1242 fastened to the fourth arm member 1420, and a second interlocking member 1350 disposed to be engaged with the third arm member and the fourth arm member.

The third hinge structure 200c may further include a second shaft bracket 1270 that fixes the third shaft and the fourth shaft, one or more second torque brackets 1260 disposed between the second shaft bracket and the second interlocking member, a plurality of ring structure 1251 and 1252 disposed between the second shaft bracket and the second interlocking member to alternate with the one or more second torque brackets 1260, a fifth center bar bracket 1191 including a plurality of protrusion areas coupled with the first slot of the third center bar, a sixth center bar bracket 1192 including a plurality of protrusion areas coupled with the second slot of the third center bar, a third cam 1361 disposed between the fifth center bar bracket 1191 and the second shaft bracket, a fourth cam 1362 disposed between the sixth center bar bracket 1192 and the second shaft bracket, a third elastic member 1281 disposed between the third cam 1361 and the fifth center bar bracket 1191, and a fourth elastic member 1282 disposed between the fourth cam 1362 and the sixth center bar bracket 1192.

The second shaft bracket, the second torque brackets, the plurality of ring structures, the third cam, the fourth cam, the third elastic member, and the fourth elastic member may form a detent structure.

The fifth center bar bracket and the sixth center bar bracket may form a center bar driving structure.

The detent structure and the center bar driving structure may be disposed on one side or opposite sides of the second interlocking member.

The third hinge structure may further include a third rotating member 2510 that rotates about the same axis as the first rotating member and a fourth rotating structure 2520 that rotates about the same axis as the second rotating member.

The third center bar 173 may be formed such that an area corresponding to the third rotating member 2510 and the fourth rotating member 2520 has a narrower width than the remaining area other than the third rotating member 2510 and the fourth rotating member 2520.

At least one of the first center bar or the second center bar may be formed such that an area corresponding to the first rotating member 210 and the second rotating member 220 has a narrower width than the remaining area other than the first rotating member 210 and the second rotating member 220. The third center bar 173 may be formed such that an area corresponding to the third rotating member 2510 and the fourth rotating member 2520 has a narrower width than the remaining area other than the third rotating member 2510 and the fourth rotating member 2520.

At least one of the first center bar or the second center bar may not be formed in an area corresponding to the first rotating member 210 and the second rotating member 220, and the third center bar 173 may be formed such that an area corresponding to the third rotating member 2510 and the fourth rotating member 2520 has a narrower width than the remaining area other than the third rotating member 2510 and the fourth rotating member 2520.

The third hinge structure may perform a hinge operation with respect to N axes (here, N being a natural number of 2 or more), and at least one of the first hinge structure or the second hinge structure may perform a hinge operation with respect to M axes (here, M being a natural number greater than N).

At least one of the first hinge structure 200a or the second hinge structure 200b may include a fixed bracket 230 that is at least partially seated on the hinge housing 150 and that includes a first rail 231 and a second rail 232, a first rotating member 210 including a first rail structure 211 that is fastened to the first rail 231 and that rotates about a first axis and a second rail structure 212 that extends from the first rail structure 211 and rotate about a second axis, a second rotating member 220 including a third rail structure 221 that is fastened to the second rail 232 and that rotates about a fifth axis and a fourth rail structure 222 that extends from the third rail structure 221 and rotate about a sixth axis, a first arm member 410 that rotates in response to rotation of the first rotating member 210 and includes a fifth rail structure 411 that rotates about a fourth axis, a second arm member 420 that rotates in response to rotation of the second rotating member 220 and includes a sixth rail structure 421 that rotates about an eighth axis, a first link member 310 including a third rail 311 fastened with the fifth rail structure 411, a second link member 320 including a fourth rail 321 fastened with the sixth rail structure 421, a third link member 330 including a fifth rail 331 fastened with the third rail structure 221, a fourth link member 340 including a sixth rail 341 fastened with the fourth rail structure 222, a first shaft 241 inserted into one side of the first arm member 410 to form a third axis about which the first arm member 410 rotates, and a second shaft 242 inserted into one side of the second arm member 420 to form a seventh axis about which the second arm member rotates.

The third hinge structure 200c may include a third arm member 1410 that rotates in response to rotation of the first wing plate 131 and includes a seventh rail structure 1411 that rotates about an eleventh axis, a fourth arm member 1420 that rotates in response to rotation of the second wing plate 132 and includes an eighth rail structure 1421 that rotates about a fourteenth axis, a third shaft 1241 inserted into one side of the third arm member 1410 to form a tenth axis about which the third arm member rotates, a fourth shaft 1242 inserted into one side of the fourth arm member 1420 to form a thirteenth axis about which the fourth arm member rotates, a fifth link member 1310 that supports the rotation of the third arm member and includes a ninth rail 1335, and a sixth link member 1320 that supports the rotation of the fourth arm member and includes a tenth rail 1345.

The first wing plate may include a ninth rail structure 1610 that protrudes toward the third hinge structure and that is fastened to the ninth rail to rotate about a ninth axis, and the second wing plate may include a tenth rail structure that protrudes toward the third hinge structure and that is fastened to the tenth rail to rotate about a twelfth axis.

The tenth axis may be parallel to the third axis, and the thirteenth axis may be parallel to the seventh axis.

As described above, a foldable electronic device according to at least one embodiment among various embodiments may include a display 160, a first housing 110 and a second housing 120 in each of which at least a portion of the display is accommodated, a first wing plate 131 that is disposed in the first housing 110 and that supports a folding area of the display, a second wing plate 132 that is disposed in the second housing 120 and that supports the folding area of the display, a plurality of hinge structures 200a, 200b, and 200c that foldably connect the first housing 110 and the second housing 120, and a hinge housing 150 on which the plurality of hinge structures are seated. The plurality of hinge structures may include a first hinge structure 200a including a first center bar 171, a second hinge structure 200b including a second center bar 172 disposed side by side with the first center bar, and a third hinge structure 200c that is disposed between the first hinge structure 200a and the second hinge structure 200b and that includes a third center bar 173 disposed between the first center bar and the second center bar. The third center bar 173 may be formed to continuously cross the third hinge structure without a non-continuous section.

## Claims

1. A foldable electronic device comprising:
a foldable display (160);
a first housing (110) and a second housing (120) in each of which at least a portion of the display is accommodated;
a first wing plate (131) disposed in the first housing (110) and configured to support a folding area of the foldable display;
a second wing plate (132) disposed in the second housing (120) and configured to support the folding area of the foldable display;
a plurality of hinge structures (200a, 200b, 200c) configured to foldably connect the first housing (110) and the second housing (120); and
a hinge housing (150) in which the plurality of hinge structures are at least partially disposed,
wherein the plurality of hinge structures include:
a first hinge structure (200a) and a second hinge structure (200b) spaced apart from each other; and
a third hinge structure (200c) disposed between the first hinge structure (200a) and the second hinge structure (200b) and engaged with the first wing plate (131) and the second wing plate (132) to rotate in conjunction with the first wing plate (131) and the second wing plate (132).

2. The foldable electronic device of claim 1, wherein the first hinge structure (200a) includes a first center bar (171) configured to extend in a first direction,
wherein the second hinge structure (200b) includes a second center bar (172) configured to extend in a second direction,
wherein the third hinge structure 200c includes a third center bar 173 disposed between the first center bar 171 and the second center bar 172, and
wherein the third center bar 173 is continuously formed to cross the third hinge structure (200c).

3. The foldable electronic device of claim 2, further comprising:
a first center bar bridge (181) configured to connect the first center bar (171) and the third center bar (173); and
a second center bar bridge (182) configured to connect the second center bar (172) and the third center bar (173),
wherein the first center bar (171), the first center bar bridge (181), the third center bar (173), the second center bar bridge (182), and the second center bar (172) are arranged in a continuous line and at least one of the first center bar (171), the first center bar bridge (181), the third center bar (173), the second center bar bridge (182), and the second center bar (172) is configured to support at least a part of the folding area of the foldable display when the electronic device is in an unfolded state.

4. The foldable electronic device of claims 2 or 3, wherein at least one of the first center bar, the second center bar, or the third center bar includes:
a first guide structure (177) including a first slot (175a) open in a third direction different from the first direction and the second direction and a second slot (175b) open in a fourth direction opposite to the third direction; and
a second guide structure (178) spaced apart from the first guide structure (177), the second guide structure (178) including a third slot (176a) open in the third direction and a fourth slot (176b) open in the fourth direction, and
wherein the at least one of the first center bar, the second center bar, or the third center bar is configured to be actuated towards the folding area of the foldable display via their respective slots during unfolding of the foldable electronic device.

5. The foldable electronic device of claim 4, wherein at least one of the first hinge structure (200a) or the second hinge structure (200b) includes:
a fixed bracket (230) at least partially disposed in the hinge housing;
a first rotating member (210) and a second rotating member (220) coupled to the fixed bracket;
a first arm member (410) configured to rotate in response to rotation of the first rotating member;
a second arm member (420) configured to rotate in response to rotation of the second rotating member;
a first shaft (241) fastened to the first arm member (410);
a second shaft (242) fastened to the second arm member (420);
a first link member (310) configured to support a rotation operation or a sliding operation of the first rotating member;
a second link member (320) configured to support a rotation operation or a sliding operation of the second rotating member;
a third link member (330) configured to support a rotation operation or a sliding operation of the first arm member;
a fourth link member (340) configured to support a rotation operation or a sliding operation of the second arm member; and
a first interlocking member (350) disposed to be engaged with the first arm member and the second arm member.

6. The foldable electronic device of claim 5, wherein at least one of the first center bar or the second center bar does not overlap at least one of the first rotating member (210) or the second rotating member (220).

7. The foldable electronic device of claim 5, wherein at least one of the first center bar or the second center bar has an area corresponding to the first rotating member (210) and the second rotating member (220) that has a narrower width than an area other than the area corresponding to the first rotating member (210) and the second rotating member (220).

8. The foldable electronic device of claim 5, wherein at least one of the first hinge structure (200a) or the second hinge structure (200b) further includes:
a first shaft bracket (270) configured to fix the first shaft and the second shaft;
one or more first torque brackets (260) disposed between the first shaft bracket and the first interlocking member;
a plurality of ring structure (251, 252) disposed between the first shaft bracket and the first interlocking member to alternate with the one or more first torque brackets (260);
a first center bar bracket (191) including a plurality of protrusion areas configured to engage with the first slot;
a second center bar bracket (192) including a plurality of protrusion areas configured to engage with the second slot;
a third center bar bracket (193) including a plurality of protrusion areas configured to engage with the third slot;
a fourth center bar bracket (194) including a plurality of protrusion areas configured to engage with the fourth slot;
a first cam (361) disposed between the first center bar bracket and the first shaft bracket;
a second cam (362) disposed between the second center bar bracket and the first shaft bracket;
a first elastic member (281) disposed between the first cam (361) and the first center bar bracket (191) and configured to push the first cam toward the first shaft bracket; and
a second elastic member (282) disposed between the second cam (362) and the second center bar bracket (192) and configured to push the second cam toward the first shaft bracket.

9. The foldable electronic device of claim 5, wherein the third hinge structure (200c) includes:
a fifth link member (1310) configured to rotate in response to rotation of the first wing plate (131);
a sixth link member (1320) configured to rotate in response to rotation of the second wing plate (132);
a third arm member (1410) configured to operate in conjunction with the rotation of the fifth link member (1310);
a fourth arm member (1420) configured to operate in conjunction with the rotation of the sixth link member (1320);
a third shaft (1241) fastened to the third arm member (1410);
a fourth shaft (1242) fastened to the fourth arm member (1420); and
a second interlocking member (1350) disposed to be engaged with the third arm member and the fourth arm member.

10. The foldable electronic device of claim 9, wherein the third hinge structure (200c) further includes:
a second shaft bracket (1270) configured to fix the third shaft and the fourth shaft;
one or more second torque brackets (1260) disposed between the second shaft bracket and the second interlocking member;
a plurality of ring structures (1251, 1252) disposed between the second shaft bracket and the second interlocking member to alternate with the one or more second torque brackets (1260);
a fifth center bar bracket (1191) including a plurality of protrusion areas configured to engage with the first slot of the third center bar;
a sixth center bar bracket (1192) including a plurality of protrusion areas configured to engage with the second slot of the third center bar;
a third cam (1361) disposed between the fifth center bar bracket (1191) and the second shaft bracket;
a fourth cam (1362) disposed between the sixth center bar bracket 1192 and the second shaft bracket;
a third elastic member (1281) disposed between the third cam (1361) and the fifth center bar bracket (1191) and configured to push the third cam toward the second shaft bracket; and
a fourth elastic member (1282) disposed between the fourth cam (1362) and the sixth center bar bracket (1192) and configured to push the fourth cam toward the second shaft bracket.

11. The foldable electronic device of claim 10, wherein the second shaft bracket, the second torque brackets, the plurality of ring structures, the third cam, the fourth cam, the third elastic member, and the fourth elastic member form a detent structure,
wherein the fifth center bar bracket and the sixth center bar bracket form a center bar driving structure, and
wherein the detent structure and the center bar driving structure are disposed on one side or opposite sides of the second interlocking member.

12. The foldable electronic device of any one of claims 9 to 11, wherein the third hinge structure further includes:
a third rotating member (2510) configured to rotate about the same axis as the first rotating member; and
a fourth rotating member (2520) configured to rotate about the same axis as the second rotating member.

13. The foldable electronic device of claim 12, wherein the third center bar 173 has an area corresponding to the third rotating member (2510) and the fourth rotating member (2520) that has a narrower width than an area other than the area corresponding to the third rotating member 2510 and the fourth rotating member 2520.

14. The foldable electronic device of any of claims 5 to 12, wherein at least one of the first center bar or the second center bar is not formed in an area corresponding to the first rotating member 210 and the second rotating member 220.

15. The foldable electronic device of any preceding claim, wherein the third hinge structure performs a hinge operation with respect to N axes and at least one of the first hinge structure or the second hinge structure performs a hinge operation with respect to M axes, wherein N is greater than or equal to two and M is greater than N.
